# EUROPÄISCHE PATENTSCHRIFT

(11) **EP 3 508 066 B1**
(45) Veröffentlichungstag und Bekanntmachung des Hinweises auf die Patenterteilung: **01.11.2023**
(21) Anmeldenummer: 18150129.7
(22) Anmeldetag: 03.01.2018
(51) Int. Cl.: A22C 21/00, A22B 7/00

(54) **ANORDNUNG UND VERFAHREN ZUR VERARBEITUNG VON GEFLÜGEL**
ARRANGEMENT AND METHOD FOR PROCESSING POULTRY
AGENCEMENT ET PROCÉDÉ POUR LE TRAITEMENT DE VOLAILLES

(43) Veröffentlichungstag der Anmeldung: 10.07.2019
(73) Patentinhaber: BAADER Food Systems Denmark A/S, 8380 Trige (DK)
(72) Erfinder: Nielsen, Karsten, 8600 Silkeborg (DK); Kjeldsen, Poul, 8400 Ebeltoft (DK)
(74) Vertreter: Stork Bamberger Patentanwälte PartmbB

(56) Entgegenhaltungen:
- US-A- 5 605 503
- US-A1- 2002 034 565
- US-A1- 2007 254 572
- US-A1- 2017 172 165

## Beschreibung

Die vorliegende Erfindung betrifft eine Anordnung zur Verarbeitung von Geflügel, umfassend mindestens eine zum Fördern des Geflügels mit einer vorgegebenen Fördergeschwindigkeit eingerichtete, eine Förderstrecke bildende Hängefördereinrichtung, die eingerichtet ist, das Geflügel an den Beinen hängend zu fördern, eine Mehrzahl an entlang der Förderstrecke angeordneten Bearbeitungsstationen, wobei die Förderstrecke zur Bearbeitung des Geflügels an jeder der Bearbeitungsstationen Bearbeitungsförderabschnitte aufweist.

Des Weiteren betrifft die Erfindung ein Verfahren zur Verarbeitung von Geflügel, umfassend Fördern des Geflügels mit einer vorgegebenen Fördergeschwindigkeit mittels einer eine Förderstrecke bildende Hängefördereinrichtung, die eingerichtet ist, das Geflügel an den Beinen hängend zu fördern, wobei entlang der Förderstrecke eine Mehrzahl an Bearbeitungsstationen angeordnet ist und die Förderstrecke zur Bearbeitung des Geflügels an jeder der Bearbeitungsstationen Bearbeitungsförderabschnitte aufweist.

Derartige Anordnungen und Verfahren kommen insbesondere bei der automatischen Verarbeitung von Geflügel zum Einsatz. In der Regel durchläuft das Geflügel mehrere Bearbeitungsstationen, angefangen von der Betäubung des Geflügels, dem Schlachten und Ausbluten, dem Brühen des Geflügels zum Entfedern, dem Entweiden und dem sich daran anschließenden Kühlen des Geflügels.

Insbesondere kommen derartige Anordnungen und Verfahren in kompakten Produktionsanlagen zum Einsatz. Hierbei handelt es sich um kleine Produktionsanlagen, deren Durchsatzleistung und Fördergeschwindigkeit entsprechend betreiberseitig vorgegeben werden. Vorteilhafterweise sind diese Produktionsanlagen unmittelbar am Ort einer Geflügelfarm installiert werden. Um ein optimales Produktionsergebnis zu erhalten, ist es erforderlich, die Produktionsanlage sowie die einzelnen Verfahrensschritte im Vorfeld zum Parametrieren und an die jeweiligen Gegebenheiten einzustellen. Ein wesentlicher Betriebsparameter besteht in der jeweiligen Verweildauer des Geflügels in den jeweiligen Bearbeitungsstationen. In der Regel besteht die Möglichkeit, durch Änderung der jeweiligen Bearbeitungsabschnittslänge in eine Bearbeitungsstation die Verweildauer an die jeweiligen Gegebenheiten anzupassen. Diese Einstellarbeiten werden regelmäßig im Stillstand der Produktionsanlagen, also entweder vor Produktionsbeginn oder während eines Produktionsstopps, durchgeführt und erfordern einen manuellen Eingriff in die Produktionsanlage. Hierzu sind regelmäßig umfangreiche physikalische und/oder mechanische Eingriffe in die Produktionsanlage erforderlich, die mit einem entsprechend hohen Aufwand verbunden und so insgesamt entsprechend zeitraubend sind.

Eine weitere Möglichkeit, die Verweildauer des Geflügels in einer der Bearbeitungsstationen zu variieren besteht darin, die Fördergeschwindigkeit, mittels derer die Tiere durch die Bearbeitungsstation gefördert werden, zu variieren und an die jeweiligen Gegebenheiten anzupassen. Nachteilig ist hierbei, dass ein Ändern der Fördergeschwindigkeit sich auf die Verweildauer bzw. die effektive Bearbeitungsdauer des Geflügels in sämtlichen Bearbeitungsstationen auswirkt. Die Veränderung der Verweildauer in einer der Bearbeitungsstationen führt damit zwangsläufig zu einer Beeinflussung der jeweiligen Verweildauern in den übrigen Bearbeitungsstationen.

Aus dem Dokument US 2007/0254572 A1 geht eine Vorrichtung sowie ein Verfahren zum Betäuben von Geflügel hervor, bei dem mittels Änderung der Fördergeschwindigkeit die Verweildauer des Geflügels in der Betäubungsvorrichtung variiert wird. Wie bereits zuvor ausgeführt, besteht ein wesentlicher Nachteil der bekannten Vorrichtung darin, dass sich eine Variation der Verweildauer des Geflügels in der Betäubungsstation aufgrund der Änderung der Fördergeschwindigkeit unmittelbar auf sämtliche Verweildauern in den jeweils nachgeordneten Bearbeitungsstationen auswirkt. Zudem wirkt sich eine Änderung der Verweildauer des Geflügels in der Betäubungsstation durch Ändern der Fördergeschwindigkeit auf die Durchsatzleistung der Produktionsanlage insgesamt aus. Dokument US-A-5.605.503 offenbart eine Anordnung zur Verarbeitung von Geflügel nach dem Oberbegriff des Anspruchs 1.

Es ist daher Aufgabe der vorliegenden Erfindung, eine Anordnung zur Verarbeitung von Geflügel vorzuschlagen, die einer optimale Parametrierung der jeweiligen Bearbeitungsstation gewährleistet. Die Aufgabe besteht auch darin, eine Anordnung bereitzustellen, deren Bearbeitungsstationen jeweils individuell und unabhängig von den übrigen Arbeitsstationen optimal an den jeweiligen Produktionsprozess eingestellt werden kann. Des Weiteren besteht die Aufgabe darin, ein entsprechendes Verfahren vorzuschlagen.

Die Aufgabe wird durch eine Anordnung mit den eingangs genannten Merkmalen dadurch gelöst, dass wenigstens zwei Bearbeitungsabschnittslängen der Bearbeitungsförderabschnitte steuervariabel ausgebildet sind. Dies bietet den Vorteil, dass die effektiven Bearbeitungsabschnittslängen der jeweiligen Bearbeitungsstation längenvariabel eingerichtet sind. Die effektive Bearbeitungsabschnittslänge bezeichnet die Wegstrecke entlang des entsprechenden Bearbeitungsförderabschnitts, entlang derer das Geflügel mit den Werkzeugen oder Einrichtungen einer der Bearbeitungsstationen interagiert. Anders ausgedrückt findet ein Einwirken auf das Geflügel ausschließlich in dem durch Bearbeitungsabschnittslänge definierten Teilabschnitt der Förderstrecke statt. In den übrigen Teilabschnitten der Förderstrecke der jeweiligen Bearbeitungsstation wird das Geflügel zwar weiter gefördert, jedoch erfolgt keine Interaktion der Bearbeitungsstation mit dem Geflügel in diesen Teilabschnitten.

Die Verweildauer des Geflügels in der jeweiligen Bearbeitungsstation kann auf diese Weise durch variable Anpassung der jeweiligen Bearbeitungsabschnittslänge unabhängig von den jeweils anderen Bearbeitungsstationen gesteuert werden. Dies bietet den Vorteil, dass jede der jeweiligen Bearbeitungsstationen optimal parametrierbar ist. Eine Änderung der Bearbeitungsabschnittslängen führt nicht zwangsläufig dazu, dass auch die Fördergeschwindigkeit entsprechend anzupassen ist. Vorteilhafterweise wird die Fördergeschwindigkeit entsprechend einer Sollfördergeschwindigkeitsvorgabe angepasst, sofern die Änderung einer der Bearbeitungsabschnittslängen dies erfordert.

Eine zweckmäßige Ausgestaltung der Erfindung zeichnet sich dadurch aus, dass die Anordnung eine Steuereinrichtung umfasst, die eingerichtet ist, jeweils die Bearbeitungsabschnittslängen der Bearbeitungsförderabschnitte im laufenden Betrieb einzustellen. Anders ausgedrückt ist es möglich, die jeweiligen Bearbeitungsabschnittslängen augenblicklich in Echtzeit durch Verlängern oder Verkürzen der jeweiligen aktiven Prozesstransportstrecke, die der jeweiligen Bearbeitungsabschnittslänge entspricht, anzupassen. Vorzugsweise ist die Steuereinrichtung Teil einer Gesamtsteuerung, mittels derer der gesamte Produktionsprozess zentral gesteuert wird. Um die gewünschte Produktqualität zu erzielen, werden mittels der Gesamtsteuerung sämtliche Prozessparameter vorgegeben und/oder im laufenden Betrieb an die jeweiligen Gegebenheiten angepasst. Hiermit werden beispielsweise Prozessparameter für das Betäuben, Ausbluten, Brühen und Entfedern eingestellt. Vorteilhafterweise werden diese Prozessparameter in der Gesamtsteuerung überwacht, berechnet und ständig kontrolliert und - sofern erforderlich - umgehend angepasst. Derartige Prozessparameter betreffen beispielsweise elektrische Spannungen, vorgegebene Frequenzen, Gaskonzentrationen, vorgegebene Solltemperaturen, gewünschte Bewegungsabläufe, Drehzahlen von Antrieben, Durchsatzleistungen und Zeitvorgaben für die jeweiligen Bearbeitungsstationen.

Damit ist die Möglichkeit gegeben, während des laufenden Betriebs die jeweiligen Bearbeitungsprozesse nachzujustieren oder an sich ändernde Produktionsbedingungen anzupassen. Hierdurch wird es erstmals möglich, auf besonders komfortable Weise im laufenden Betrieb zuvor festgelegte Voreinstellungen zu ändern. Mit anderen Worten sind die einzelnen Prozessparameter der jeweiligen Bearbeitungsstation funktional mit denjenigen einer vor- oder nachgeordneten Bearbeitungsstation verknüpft. Soll beispielsweise die Bearbeitungsabschnittslänge einer beliebigen Bearbeitungsstation verändert werden, so ist es in der Regel erforderlich, die Parametrierung der dieser Bearbeitungsstation nachgeordneten Bearbeitungsstation anzupassen. Die vorliegende Erfindung ermöglicht erstmalig, dass diese Parametrierung der einzelnen Bearbeitungsstationen voneinander unabhängig und entkoppelt erfolgt. Mit anderen Worten erlaubt die vorliegende Erfindung jeden Prozessschritt in den einzelnen Bearbeitungsstationen einzustellen, ohne dass die Veränderung einer der Bearbeitungsabschnittslängen Einfluss auf die jeweils nachgeordneten Bearbeitungsstationen hat. Jeder Bearbeitungsabschnittslänge kann auf diese Weise unabhängig von den jeweils anderen Bearbeitungsabschnittslängen individuell gesteuert werden.

Eine bevorzugte Weiterbildung der Erfindung sieht vor, dass die Steuereinrichtung weiter eingerichtet ist, beim Verändern einer der Bearbeitungsabschnittslängen, die jeweils übrigen der Bearbeitungsabschnittslängen auf Basis vorgegebener Sollabschnittslängen einzustellen. Vorteilhafterweise können so mehrere der Bearbeitungsstationen an verschiedene Produktionsbedingungen angepasst werden. Wird eine der Bearbeitungsabschnittslängen durch steuervariables Eingreifen mittels der Steuereinrichtung verändert, ist es vorteilhaft, auch die Bearbeitungsabschnittslängen weiterer Bearbeitungsstationen gemäß hierfür vorgegebener Sollabschnittslängen einzustellen. Insgesamt lässt sich so der gesamte Produktionsprozess an die jeweiligen Gegebenheiten optimal anpassen, und so die Prozessgüte optimieren.

Gemäß einer weiteren bevorzugten Ausführungsform umfassen die Bearbeitungsstationen zumindest eine Betäubungsstation zum Betäuben des Geflügels, eine Schlachtstation zum Eröffnen der Halsvene und zum Ausbluten des Geflügels sowie eine Brühstation zum Brühen des Geflügels. Vorzugsweise sind jeweils die Bearbeitungsabschnittslängen der vorgenannten Bearbeitungsstationen steuervariabel ausgebildet und eingerichtet, wobei insbesondere im Bereich der Schlachtstation ausschließlich derjenige Förderabschnitt eine steuervariable Bearbeitungsabschnittslänge aufweist, der zum Ausbluten des Geflügels dient, während derjenige Bereich, der zum Eröffnen der Halsvenen dient, vorzugsweise eine feste Abschnittslänge aufweist.

Aufgrund der Steuervariabilität der vorgenannten Bearbeitungsstation ist der gesamte Verarbeitungsprozess optimal an die jeweiligen Produktionsbedingungen anpassbar. Ist beispielsweise eine längere Verweildauer des Geflügels in der Betäubungsstation gewünscht, so wird mittels der Steuereinrichtung die zugehörige Bearbeitungsabschnittslänge vergrößert. Die längere Verweildauer der Tiere in der Betäubungsstation führt zu einer tieferen Betäubung der Tiere. Dies hat in der Regel zur Folge, dass der Herzstillstand der Tiere rascher eintritt. Hierdurch erhöht sich die erforderliche Zeit zum Ausbluten, da nach dem Eröffnen der Halsvenen in der Schlachtstation der Ausblutevorgang nicht mehr oder nur noch für einen kurzen Zeitraum durch den Herzschlag unterstützt wird. Auf Basis der vorgegebenen Sollabschnittslängen für jede der Bearbeitungsabschnittslängen wird nun mittels der Steuereinrichtung die Bearbeitungsabschnittslänge der Schlachtstation angepasst und im vorliegenden Beispiel entsprechend vergrößert. Mit den weiteren Bearbeitungsstationen bzw. deren Bearbeitungsabschnittslängen wird in analoger Weise verfahren.

Gemäß einer weiteren bevorzugten Ausbildung der Erfindung ist die Hängefördereinrichtung ein umlaufender Endlosförderer. Dies bietet den Vorteil, dass das Geflügel mittels ein und derselben Endlosförderlinie durch sämtliche der vorgenannten Bearbeitungsstationen befördert wird. Andernfalls erforderliche Übergabe- und/oder Pufferstationen, beispielsweise zur Kompensation unterschiedlicher Fördergeschwindigkeiten in den einzelnen Bearbeitungsstationen, können entfallen. Zudem ist die Fördergeschwindigkeit konstant oder im Wesentlichen konstant und in jeder der Bearbeitungsstationen gleich. Die Hängefördereinrichtung weist zur Aufnahme kopfüber an den Beinen hängenden Geflügels geeignete Schäkel zur Aufnahme der Geflügelbeine auf.

Eine weitere zweckmäßige Ausbildung der Erfindung ist dadurch gekennzeichnet, dass die längenvariablen Bearbeitungsabschnitte der Betäubungsstation, der Schlachtstation und/oder der Brühstation jeweils durch mindestens zwei Umlenkelemente gebildet werden, um die eine Förderkette des Hängeförderers zumindest teilweise umläuft, wobei mindestens eines der Umlenkelemente zur steuerbaren Änderung der Bearbeitungsabschnittslänge verfahrbar ausgebildet ist. Die Umlenkelemente definieren also jeweils die Bearbeitungsabschnittslänge an einer der Bearbeitungsstationen. Zur steuerbaren Änderung der jeweiligen Bearbeitungsabschnittslänge wird mindestens eines der Umlenkelemente relativ zu dem jeweils anderen Umlenkelement aus seiner ursprünglichen Position in eine neue Position bewegt.

Durch Verkleinern des Abstandes zwischen den Umlenkelementen findet eine Verkürzung der jeweiligen Bearbeitungsabschnittslänge statt. Entsprechend wird eine Vergrößerung der Bearbeitungsabschnittslänge durch Vergrößern des Umlenkelementabstandes erzielt. Das verfahrbar ausgebildete Umlenkelement wird vorzugsweise pneumatisch, hydraulisch oder elektromotorisch bewegt. Die Steuereinrichtung umfasst hierzu entsprechend eingerichtete Ansteuermittel.

Gemäß einer weiteren bevorzugten Ausbildung der Erfindung umfasst die Hängefördereinrichtung eine Kompensationseinrichtung, die eingerichtet ist, eine sich durch eine Änderung der Bearbeitungsabschnittslänge ergebende Änderung der Gesamtlänge der Förderstrecke zu kompensieren. Auf diese Weise wird die Gesamtlänge der Förderstrecke automatisch - bei einer Veränderung der jeweiligen Bearbeitungsabschnittslängen - konstant gehalten. Auch dies trägt zu Unabhängigkeit der Einstellbarkeit der einzelnen Bearbeitungsabschnittslängen bei.

Die Kompensationseinrichtung weist eine Kompensationsstrecke auf, deren Länge - im Folgenden als Kompensationsstreckenlänge bezeichnet - der Summe der jeweils maximalen Änderungen aller Bearbeitungsabschnittslängen entspricht. Auf diese Weise wird sichergestellt, dass jede Einstellung der Bearbeitungsabschnittslängen zuverlässig mittels der Kompensationseinrichtung kompensiert wird. Zudem wird mittels der Kompensationseinrichtung eine Veränderung der Kettenspannung bzw. ein unerwünschtes Durchhängen der Förderkette der Hängefördereinrichtung vermieden.

Gemäß einer weiteren bevorzugten Ausführungsform umfasst die Kompensationseinrichtung ein als Kompensationsstreckenumlenkelement ausgebildetes Umlenkelement und bildet so eine längenvariable Kompensationsstrecke zur Aufnahme der Förderkette, wobei das Kompensationsstreckenumlenkelement positionsvariabel zur steuerbaren Änderung der Kompensationsstreckenlänge ausgebildet ist. Anders ausgedrückt ist die Länge der Kompensationsstrecke durch eine Veränderung der Position des Kompensationsstreckenumlenkelements steuerveränderlich eingerichtet.

Das Kompensationsstreckenelement wird vorzugsweise hydraulisch, pneumatisch oder elektromotorisch mittels der Steuereinrichtung verfahren und so die jeweilige gewünschte Position eingestellt. Die Steuereinrichtung umfasst hierzu eingerichtete Steuermittel. Wird eine oder werden mehrere der Bearbeitungsabschnittslängen verändert, so wird vorzugsweise mittels der Steuereinrichtung veranlasst, das Kompensationsstreckelement um einen der Summe dieser Streckenänderungen entsprechenden Weg so zu verschieben, dass die Gesamtförderstreckenlänge konstant bleibt. Vorteilhafterweise können so die jeweiligen Bearbeitungsabschnittslängen weitestgehend beliebig und voneinander unabhängig variiert werden. Vorteilhafterweise ist die Steuereinrichtung weiter eingerichtet, die Kompensationseinrichtung derart anzusteuern, dass die Kompensationsstreckenlänge der Summe der Änderungen der Bearbeitungsabschnittslängen entspricht.

Eine weitere zweckmäßige Ausbildung der Erfindung ist dadurch gekennzeichnet, dass die Betäubungsstation, die Schlachtstation sowie die Brühstation jeweils Längsabmessungen aufweisen, die größer als die jeweiligen Bearbeitungsförderabschnitte sind. Die jeweils längste Verweildauer des Geflügels in einer der Bearbeitungsstationen wird erreicht, wenn die Bearbeitungsabschnittslänge der jeweiligen Bearbeitungsstation der Längsabmessung der jeweiligen Bearbeitungsstation entspricht. Durch Verkürzen der jeweiligen Bearbeitungsabschnittslänge kommt das Geflügel nur mit einem Teil der entlang der Bearbeitungsstrecke angeordneten Einrichtungen der jeweiligen Bearbeitungsstation in Kontakt. Auf diese Weise ist die effektive Verweildauer, während der eine Einwirkung auf das Geflügel stattfindet, steuervariabel eingerichtet.

Gemäß einer weiteren bevorzugten Ausführungsform umfassen die Bearbeitungsstationen eine Entfederungsstation zum Entfedern des Geflügels, wobei entlang des Bearbeitungsförderabschnitts der Entfederungsstation eine Mehrzahl an Entfederungswerkzeuggruppen angeordnet ist, die jeweils derart ansteuerbar eingerichtet sind, dass diese mit dem Geflügel in vorgegebenen Kontaktabschnitten des Bearbeitungsförderabschnitts in Bearbeitungskontakt mit dem Geflügel kommen. Die Bearbeitungsabschnittslänge sowie die damit gekoppelte Verweildauer des Geflügels in der Entfederungsstation wird folglich nicht durch eine Veränderung der zu passierenden Förderstrecke variiert. Die Länge des Förderabschnitts in der Entfederungsstation ist also bevorzugt konstant eingerichtet.

Eine bevorzugte Ausbildung der Erfindung sieht vor, dass zum Verändern der Bearbeitungsabschnittslänge der Entfederungsstation die Entfederungswerkzeuggruppen einzeln steuerbar aktivier- und deaktivierbar eingerichtet sind. Die Bearbeitungsabschnittslänge der Entfederungsstation wird also durch die Anzahl der aktivierten bzw. deaktivierten Entfederungswerkzeuggruppen eingestellt. Die Verweildauer des Geflügels, während dieses im Einflussbereich jeweils aktivierter Entfederungswerkzeuggruppen ist, ist auf diese Weise einstellbar eingerichtet. Bedarfsabhängig wird so die erforderliche Entfederungswirkung erzielt.

Eine weitere zweckmäßige Ausbildung der Erfindung ist dadurch gekennzeichnet, dass zum Verändern der Bearbeitungsabschnittslänge der Entfederungsstation der Werkzeugabstand mindestens einer der Entfederungswerkzeuggruppen steuerveränderlich eingerichtet ist. Eine Änderung der Bearbeitungsabschnittslänge wird auf diese Weise in der Entfederungsstation dadurch erzielt, dass der Werkzeugabstand, also der Abstand zwischen den jeweiligen Entfederungswerkzeugen und dem Geflügel, steuervariabel eingerichtet ist. Während die Entfederungswerkzeuge mit einem geringen Werkzeugabstand mit dem Geflügel in Wirkkontakt gelangen und so am Entfederungsprozess beteiligt sind, kommen diejenigen Werkzeuge mit einem vergrößerten Werkzeugabstand mit dem Geflügel nicht in Kontakt und sind daher am Entfederungsprozess nicht beteiligt. Vorzugsweise sind die Entfederungswerkzeuge senkrecht zu der Förderrichtung des Geflügels verfahrbar eingerichtet.

Gemäß einer weiteren bevorzugten Ausführungsform umfassen die Bearbeitungsstationen wenigstens eine Entweidestation zum Entfernen der Eingeweide des Geflügels, wobei die Bearbeitungswerkzeuge jeweils an einem Rundläuferwerkzeugträger angeordnet sind und der Bearbeitungsförderabschnitt der Förderstrecke der wenigstens einen Entweidestation dementsprechend kreisbogenförmig ist, wobei die Bearbeitungsabschnittslänge durch Veränderung der Einlauf- und/oder Auslaufposition des Bearbeitungsförderabschnitts am Rundläuferwerkzeugträger steuervariabel eingerichtet ist. Die Veränderung der Einlaufposition sowie der Auslaufposition bewirkt, dass sich die Kontaktpunkte, an denen die Bearbeitungswerkzeuge mit dem Geflügel in Kontakt kommen, entlang des Umfangs der Rundläuferwerkzeugträger so verschiebt, dass die Bearbeitungsabschnittlänge entsprechend steuervariabel ist.

Eine weitere zweckmäßige Ausbildung der Erfindung ist dadurch gekennzeichnet, dass die Einlauf- und/oder Auslaufposition durch verfahrbar eingerichtete Führungselemente steuervariabel eingerichtet ist. Die Führungselemente sind vorzugsweise hydraulisch, pneumatisch oder elektromotorisch angetrieben. Die Steuereinrichtung umfasst hierzu angepasste Ansteuerelemente. Durch Ändern der Position der Führungselemente kann auf besonders einfache und insbesondere rasche Weise die Bearbeitungsabschnittslänge der Entweidestation variabel gesteuert werden.

Eine weitere zweckmäßige Ausgestaltung der Erfindung ist dadurch gekennzeichnet, dass die Führungselemente jeweils mindestens ein Einlaufführungsrad sowie mindestens ein Auslaufführungsrad umfassen, die steuerbeweglich angeordnet sind. Dies bietet den Vorteil, dass über einen möglichst großen Anlagebereich die Werkzeuge des Rundläuferwerkzeugträgers mit dem Geflügel in Kontakt gelangen können und so eine möglichst große Variation der Bearbeitungsabschnittslänge erzielt wird.

Vorzugsweise umläuft die Förderkette der Endlosfördereinrichtung den Rundläuferwerkzeugträger kreisbogenförmig um mindestens 180°. Durch gesteuertes Variieren der Position des Einlaufführungsrades sowie des Auslaufführungsrades kann dieser Umlauf auf einen Winkelbereich von bis zu 270° erhöht werden. Anders ausgedrückt umschließt der Bearbeitungsförderabschnitt die Bearbeitungswerkzeuge an dem Rundläuferwerkzeugträger in einem Anlagewinkelbereich von mindestens 180° kreisbogenförmig. Zudem ist vorteilhafterweise sowohl das Einlaufführungsrad als auch das Auslaufführungsrad durch steuerbewegliches Verfahren eingerichtet, den Anlagewinkelbereich auf maximal 270° zu erhöhen.

Gemäß einer bevorzugten Ausbildung der Erfindung sind das mindestens eine Einlaufführungsrad sowie das mindestens eine Auslaufführungsrad jeweils auf den den Bearbeitungswerkzeugen gegenüberliegenden Seiten des Bearbeitungsförderabschnitts angeordnet. Anders ausgedrückt sind die Einlauf- und Auslaufführungsräder als Zwangsführungen ausgebildet. Die Förderkette der Hängefördereinrichtung ist folglich jeweils zwischen dem Rundläuferwerkzeugträger und dem Einlauf- bzw. Auslaufführungsrad geführt angeordnet.

Eine weitere bevorzugte Ausführungsform umfasst wenigstens eine Kühleinrichtung zum Kühlen des Geflügels, wobei die Kühleinrichtung eine Eingabestation zur Übergabe des Geflügels an eine erste Endloskühllinie, eine Messeinrichtung zum Erfassen mindestens einer für die Kühlverweildauer des Geflügels relevanten Messgröße, mindestens eine zweite Endloskühllinie, die mittels einer Transferstation mit der ersten Endloskühllinie zur steuerbaren Übergabe des Geflügels von der ersten Endloskühllinie an die zweite Endloskühllinie verbunden ist, an der ersten Endloskühllinie und an der wenigstens zweiten Endloskühllinie angeordnete zur steuerbaren Übergabe des Geflügels an eine weitere nachgeordnete Bearbeitungsstation eingerichtete weitere Übergabestationen, sowie eine Kühleinrichtungssteuerung, die eingerichtet ist, auf Basis der für die Kühlverweildauer relevanten Messgröße für jeden Geflügelkörper die erforderliche Kühlförderstrecke zu bestimmen und die Transferstation sowie weiteren Übergabestationen entsprechend anzusteuern, so dass der jeweilige Geflügelkörper die erforderliche Kühlförderstrecke passiert. Mit anderen Worten ist die Steuereinrichtung ausgebildet, die genannten Endloskühllinien entsprechend der erforderlichen Bearbeitungsabschnittslänge für jeden Schlachtgeflügelkörper sequentiell hintereinander zu schalten. Über die Anzahl der von einem der Schlachtgeflügelkörper zu durchlaufenden Kühlförderstrecken wird die gewünschte Bearbeitungsabschnittslänge gesteuert.

Eine weitere zweckmäßige Ausgestaltung der Erfindung ist dadurch gekennzeichnet, dass die Messeinrichtung eine Wägeeinrichtung zum Erfassen der Einzelgewichte und/oder eine Geflügeltemperaturmesseinrichtung zum Erfassen der Geflügeltemperatur umfasst, die eingerichtet sind, die Einzelgewichte und/oder die Geflügeltemperatur als die für die Kühlverweildauer relevante Messgröße zu erfassen. Die Steuereinrichtung ist folglich weiter eingerichtet, die Kühlverweildauer auf Basis der Einzelgewichte und/oder der Geflügeltemperatur optimal einzustellen.

Eine weitere zweckmäßige Ausbildung der Erfindung ist dadurch gekennzeichnet, dass die Fördergeschwindigkeit zumindest im Wesentlichen konstant ist. Vorzugsweise ist die Fördergeschwindigkeit konstant eingestellt, kann jedoch je nach Bedarf, beispielsweise zur Wahl einer abweichenden Durchsatzleistung der gesamten Anordnung bedarfsgerecht angepasst werden.

Die Aufgabe wird auch durch ein Verfahren mit den eingangs genannten Merkmalen gelöst, das sich dadurch auszeichnet, dass wenigstens zwei der Bearbeitungsabschnittslängen der Bearbeitungsförderabschnitte gesteuert eingestellt werden.

Gemäß einer weiteren bevorzugten Ausführungsform werden jeweils die Bearbeitungsabschnittslängen der Bearbeitungsförderabschnitte im laufenden Betrieb mittels einer Steuereinrichtung eingestellt.

Eine weitere zweckmäßige Ausgestaltung der Erfindung ist dadurch gekennzeichnet, dass beim Verändern einer der Bearbeitungsabschnittslängen die jeweils übrigen der Bearbeitungsabschnittslängen auf Basis vorgegebener Soll-Abschnittslängen mittels der Steuereinrichtung angepasst und eingestellt werden.

Gemäß einer weiteren bevorzugten Ausbildung der Erfindung umfassen die Bearbeitungsstationen zumindest eine Betäubungsstation zum Betäuben des Geflügels, eine Schlachtstation zum Eröffnen der Halsvenen und zum Ausbluten des Geflügels sowie eine Brühstation zum Brühen des Geflügels.

Eine weitere zweckmäßige Ausbildung der Erfindung ist dadurch gekennzeichnet, dass die Hängefördereinrichtung ein umlaufender Endlosförderer ist.

Gemäß einer weiteren bevorzugten Ausführungsform werden die längenvariablen Bearbeitungsabschnitte der Betäubungsstation, der Schlachtstation, und/oder der Brühstation jeweils durch mindestens zwei Umlenkelemente gebildet, um die eine Förderkette des Hängeförderers zumindest teilweise umläuft und mindestens eines der Umlenkelemente zur steuerbaren Änderung der Bearbeitungsabschnittslänge verfahren wird.

Eine weitere zweckmäßige Ausgestaltung der Erfindung ist gekennzeichnet durch Kompensieren einer sich durch eine Änderung der Bearbeitungsabschnittlängen ergebenden Änderung der Gesamtlänge der Förderstrecke mittels einer Kompensationseinrichtung.

Eine weitere zweckmäßige Ausbildung der Erfindung ist dadurch gekennzeichnet, dass die Kompensationseinrichtung ein als Kompensationsstreckenumlenkelement ausgebildetes Umlenkelement umfasst und so eine längenvariable Kompensationsstrecke zur Aufnahme der Förderkette bildet, wobei die Position des Kompensationsstreckenumlenkelements zur steuerbaren Änderung der Kompensationsstreckenlänge variiert wird.

Eine weitere bevorzugte Ausführungsform zeichnet sich durch Ansteuern der Kompensationseinrichtung mittels der Steuereinrichtung aus, wobei die Ansteuerung derart erfolgt, dass die Kompensationsstreckenlänge der Summe der Änderungen der Bearbeitungsabschnittslängen entspricht.

Eine weitere zweckmäßige Ausgestaltung der Erfindung ist dadurch gekennzeichnet, dass die Betäubungsstation, die Schlachtstation sowie die Brühstation jeweils Längsabmessung aufweisen, die größer als die jeweiligen Bearbeitungsförderabschnitte sind.

Eine weitere zweckmäßige Ausbildung der Erfindung ist dadurch gekennzeichnet, dass die Bearbeitungsstationen eine Entfederungsstation zum Entfedern des Geflügels umfassen, wobei entlang des Bearbeitungsförderabschnitts der Entfederungsstation eine Mehrzahl an Entfederungswerkzeuggruppen angeordnet ist, wobei die Entfederungswerkzeuge jeweils derart angesteuert werden, dass diese in vorgegebenen Kontaktabschnitten des Bearbeitungsförderabschnitts in Bearbeitungskontakt mit dem Geflügel kommen.

Gemäß einer weiteren bevorzugten Ausführungsform werden zum Verändern der Bearbeitungsabschnittslänge der Entfederungsstation die Entfederungswerkzeuggruppen einzeln vorgewählt mittels der Steuereinrichtung aktiviert oder deaktiviert.

Eine weitere zweckmäßige Ausgestaltung der Erfindung ist dadurch gekennzeichnet, dass zum Verändern der Bearbeitungsabschnittslänge der Entfederungsstation der Werkzeugabstand mindestens einer der Entfederungswerkzeuggruppen mittels der Steuereinrichtung verändert wird.

Eine weitere zweckmäßige Ausbildung der Erfindung ist dadurch gekennzeichnet, dass die Bearbeitungsstationen wenigstens eine Entweidestation zum Entfernern der Eingeweide des Geflügels umfassen, wobei die Bearbeitungswerkzeuge jeweils an einem Rundläuferwerkzeugträger angeordnet sind und der Bearbeitungsförderabschnitt der Förderstrecke der wenigstens einen Entweidestation dementsprechend kreisbogenförmig ist, wobei die Bearbeitungsabschnittslänge durch gesteuertes Eingreifen variiert wird. Eine weitere zweckmäßige Ausgestaltung der Erfindung ist dadurch gekennzeichnet, dass die Einlauf- und/oder Auslaufposition des Bearbeitungsförderabschnitts am Rundläuferwerkzeugträger mittels der Steuereinrichtung eingestellt wird.

Gemäß einer weiteren bevorzugten Ausführungsform wird die Einlauf- und/oder Auslaufposition durch das Verfahren von Führungselementen mittels der Steuereinrichtung gesteuert.

Eine weitere zweckmäßige Ausgestaltung der Erfindung ist dadurch gekennzeichnet, dass die Führungselemente jeweils mindestens ein Einlaufführungsrad sowie mindestens ein Auslaufführungsrad umfassen, die steuerbeweglich angeordnet sind.

Eine weitere zweckmäßige Ausbildung der Erfindung ist dadurch gekennzeichnet, dass der Bearbeitungsförderabschnitt die Bearbeitungswerkzeuge an dem Rundläuferwerkzeugträger in einem Anlagewinkelbereich von mindestens 180° kreisbogenförmig umschließt.

Gemäß einer weiteren bevorzugten Ausführungsform sind das mindestens eine Einlaufführungsrad sowie das mindestens eine Auslaufführungsrad jeweils auf den den Bearbeitungswerkzeugen gegenüberliegenden Seiten des Bearbeitungsförderabschnitts angeordnet.

Eine weitere zweckmäßige Ausgestaltung der Erfindung ist dadurch gekennzeichnet, dass durch steuerbewegliches Verfahren des Einlaufführungsrades und des Auslaufführungsrades der Anlagewinkelbereich auf maximal 270° erhöht wird.

Eine weitere zweckmäßige Ausbildung der Erfindung umfasst weiter die Schritte: Kühlen des Geflügels mittels einer Kühleinrichtung, Übergeben des Geflügels mittels einer Eingabestation an eine erste Endloskühllinie, Erfassen mindestens einer für die Kühlverweildauer des Geflügels relevanten Messgröße mittels einer Messeinrichtung, wobei die Kühleinrichtung mindestens eine zweite Endloskühllinie umfasst, die mittels einer Transferstation mit der ersten Endloskühllinie zur steuerbaren Übergabe des Geflügels von der ersten Endloskühllinie an die zweite Endloskühllinie verbunden ist, und wobei an der ersten Endloskühllinie und an der wenigsten zweiten Endloskühllinie zur steuerbaren Übergabe des Geflügels an eine weitere nachgeordnete Bearbeitungsstation eingerichtete weitere Übergabestationen angeordnet sind und Bestimmen der für jeden Geflügelkörper erforderlichen Kühlförderstrecke auf Basis der für die Kühlverweildauer relevanten Messgröße und entsprechendes Ansteuern der Transferstation sowie der weiteren Übergabestationen, so dass der jeweilige Geflügelkörper die erforderliche Kühlförderstrecke passiert.

Gemäß einer weiteren bevorzugten Ausführungsform werden als für die Kühlverweildauer relevante Messgröße Einzelgewichte mittels einer Wägeeinrichtung und/oder die Geflügeltemperatur mittels einer Geflügeltemperaturmesseinrichtung erfasst.

Eine weitere zweckmäßige Ausgestaltung der Erfindung ist dadurch gekennzeichnet, dass die Fördergeschwindigkeit zumindest im Wesentlichen konstant ist.

Die sich aus dem erfindungsgemäßen Verfahren ergebenden Vorteile sowie mögliche Ausgestaltungen sind eingangs ausführlich im Zusammenhang mit der erfindungsgemäßen Anordnung beschrieben worden. Zur Vermeidung von Wiederholungen wird auf diese auch im Zusammenhang mit dem erfindungsgemäßen Verfahren verwiesen.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Ansicht einer beispielhaften erfindungsgemäßen Anordnung in perspektivischer Darstellung,
- Fig. 2: die in Figur 1 gezeigte Anordnung in Draufsicht,
- Fig. 3: eine schematische Darstellung mehrerer als Rundläufer eingerichteter Bearbeitungsstationen,
- Fig. 4: eine beispielhafte Ausführung einer Kühleinrichtung in Draufsicht
und
- Fig.5: eine beispielhafte schematische Darstellung einer Verteillinie.

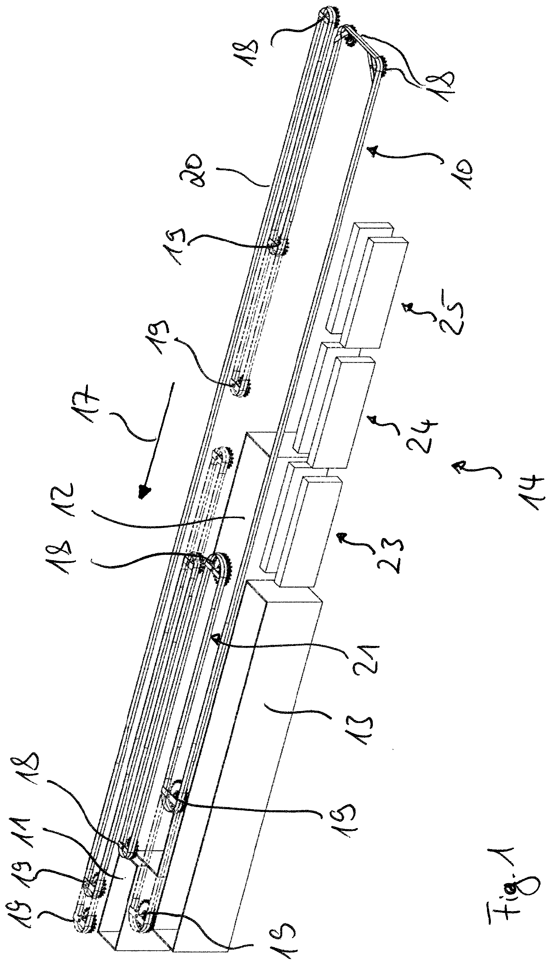

Fig. 1 zeigt beispielhaft eine schematische Ansicht einer erfindungsgemäßen Anordnung in perspektivischer Darstellung. Die erfindungsgemäße Anordnung ist zur Verarbeitung von - in der Zeichnung nicht gezeigtem - Geflügel ausgebildet und eingerichtet. Diese umfasst eine Hängefördereinrichtung 10, die eingerichtet ist, das Geflügel an den Beinen hängend zu fördern.

Die Hängefördereinrichtung 10 umfasst hierzu vorzugsweise Schäkel zur Aufnahme der Geflügelbeine. Die Hängefördereinrichtung 10 ist weiter eingerichtet, das Geflügel mit einer vorgegebenen Fördergeschwindigkeit in Förderrichtung 17 zu fördern. Vorzugsweise erfolgt die Förderung mit einer zumindest im Wesentlichen konstanten Fördergeschwindigkeit. Zumindest im Wesentlichen konstante Fördergeschwindigkeit heißt, dass die Fördergeschwindigkeit entweder konstant oder von diesem konstanten Wert geringfügig abweichend ist.

Die Hängefördereinrichtung 10 bildet eine Förderstrecke, entlang derer eine Mehrzahl an Verarbeitungsstationen angeordnet ist. Diese Bearbeitungsstationen umfassen, wie in der Fig. 1 beispielhaft gezeigt, beispielsweise eine Betäubungsstation 11, eine Schlachtstation 12, eine Brühstation 13 sowie eine Entfederungsstation 14. Die Bearbeitungsstationen können weiter - in der Fig. 1 nicht gezeigt - Entweidestationen 15 sowie Kühleinrichtungen 16 umfassen. Die Anzahl der vorgenannten Bearbeitungsstationen ist variabel und nicht auf die im vorgenannten Beispiel angegebene Anzahl beschränkt. Vielmehr richtet sich die konkrete Anzahl der jeweiligen Arbeitsstationen nach Anlagen- und Produktionskriterien.

Jeder der Bearbeitungsstationen ist jeweils ein Bearbeitungsförderabschnitt zugeordnet. Anders ausgedrückt weist die Förderstrecke an jeder der Bearbeitungsstationen entsprechende Bearbeitungsförderabschnitte auf, die eine Bearbeitung des Geflügels bzw. ein Einwirken auf dieses zulassen.

Wenigstens zwei Bearbeitungsabschnittslängen der Bearbeitungsförderabschnitte sind erfindungsgemäß steuervariabel ausgebildet. Auf diese Weise ist es möglich, die Bearbeitungs- bzw. Einwirkdauer an den jeweiligen Bearbeitungsstationen jeweils variabel einzustellen. Der Produktionsprozess ist somit an eine Vielzahl unterschiedlicher produktionstechnischer Vorgaben auf einfache und komfortable Weise anpassbar. So existieren beispielsweise spezielle Anforderungen und Vorschriften für jedes Produktionsland, die Produktionsregion und/oder die jeweilige Geflügelfarm. Weiter bevorzugt sind mehr als zwei der Bearbeitungsabschnittslängen der Bearbeitungsförderabschnitte steuervariabel eingerichtet.

Durch die gesteuerte Variation der jeweiligen Bearbeitungsabschnittslängen lassen sich die jeweiligen Bearbeitungsdauern variabel steuern und einstellen. Ein wesentlicher Vorteil der vorliegenden Erfindung besteht darin, dass diese Bearbeitungsdauern an den jeweiligen Bearbeitungsstationen einerseits veränderbar sind, andererseits jedoch die Fördergeschwindigkeit von derartigen Variationen der jeweiligen Bearbeitungsdauern unabhängig ist. Dies bedeutet, dass die Fördergeschwindigkeit der Hängefördereinrichtung 10 bei Veränderung der jeweiligen Bearbeitungsdauern konstant gehalten wird. So hat beispielsweise die Variation der Verweildauer des Geflügels in der Betäubungsstation 11 aufgrund der konstanten Fördergeschwindigkeit keine Veränderung der Verweildauer in einer der der Betäubungsstation 11 nachgeordneten weiteren Bearbeitungsstation, wie zum Beispiel der Schlachtstation 12, der Brühstation 13 oder der Entfederungsstation 14 zur Folge.

Erfindungsgemäß kann die jeweilige Verweildauer des Geflügels an einer der Bearbeitungsstationen individuell und unabhängig von den anderen Bearbeitungsstationen steuervariabel eingestellt werden. Die damit erzielbare Flexibilität beim Produktionsprozess soll beispielhaft anhand nachstehender Tabelle näher erläutert werden.

| | **1** | **2** | **3** | **4** | **5** |
|---|---|---|---|---|---|
| **Betäubungsstation** | 3 Sek. | 4 Sek. | 5 Sek. | 7 Sek. | 9 Sek. |
| **Schlachtstation** | 120 Sek. | 150 Sek. | 180 Sek. | 210 Sek. | 240 Sek. |
| **Brühstation** | 60 Sek. | 90 Sek. | 120 Sek. | 150 Sek. | 180 Sek. |
| **Entfederungsstation** | 30 Sek. | 35 Sek. | 40 Sek. | 45 Sek. | 50 Sek. |

Die Tabelle zeigt beispielhaft unterschiedliche Verweildauern des Geflügels in den jeweiligen Bearbeitungsstationen. In den Spalten 1 bis 5 sind die jeweiligen Verweildauern in Sekunden angegeben. Eine mögliche Voreinstellung zeigt beispielsweise Spalte 3. So soll die Verweildauer des Geflügels in der Betäubungsstation 5 Sekunden betragen, in der Schlachtstation 180 Sekunden, in der Brühstation 120 Sekunden und in der Entfederungsstation 40 Sekunden. Unter Berücksichtigung der gewünschten Fördergeschwindigkeit der Hängefördereinrichtung 10 werden die jeweiligen Bearbeitungsabschnittslängen der Bearbeitungsförderabschnitte derart gesteuert eingestellt, dass die in Spalte 3 angegebenen jeweiligen Verweildauern des Geflügels in einer der Bearbeitungsstationen erzielt werden. Durch steuervariables Ändern der jeweiligen Bearbeitungsabschnittslängen der Bearbeitungsförderabschnitte ist es möglich, beliebige Verweildauerkombinationen einzustellen.

Vorteilhafterweise umfasst die erfindungsgemäße Anordnung eine - in der Zeichnung nicht gezeigte - Steuereinrichtung, die eingerichtet ist, die jeweiligen Bearbeitungsabschnittslängen der Bearbeitungsförderabschnitte im laufenden Betrieb einzustellen. Anders ausgedrückt ist die Steuereinrichtung eingerichtet, die jeweils an einer der Bearbeitungsstationen aktive Prozesstransportstrecke bedarfsgemäß in Echtzeit während des laufenden Produktionsbetriebes durch Verlängern oder Verkürzen an die jeweiligen Gegebenheiten anzupassen. Auf diese Weise ist es möglich, unter Aufrechterhaltung des laufenden Produktionsbetriebes die jeweiligen Bearbeitungsabschnittslängen und damit die entsprechende Verweil- und Bearbeitungsdauer dynamisch anzupassen.

Die Steuereinrichtung ist weiter eingerichtet, beim Verändern einer der Bearbeitungsabschnittslängen mindestens eine oder sämtliche der übrigen Bearbeitungsabschnittslängen auf Basis vorgegebener Soll-Abschnittslängen einzustellen. Die Funktion der Steuereinrichtung bzw. des erfindungsgemäßen Verfahrens soll an folgendem Beispiel näher erläutert werden.

Wird beispielsweise in der Geflügelverarbeitung ein erhöhter Betäubungsgrad der Tiere in der Betäubungsstation 11 gefordert, wie dies beispielsweise die EU-Verordnung (EG) Nr. 1099/2009 fordert, so führt dieser höhere Betäubungsgrad zu einem früher eintretenden Herzstillstand der Tiere. Aufgrund des fehlenden Herzschlages verlängert sich die erforderliche Zeit zum Ausbluten entsprechend. Daher ist die Verweildauer der Tiere in der Schlachtstation 12 entsprechend zu verlängern. Die Steuereinrichtung ist daher eingerichtet, die Bearbeitungsabschnittslänge der Schlachtstation 12 entsprechend einer hierzu vorgegebenen Soll-Abschnittslänge entsprechend anzupassen.

Eine weitere Konsequenz besteht darin, dass häufig die Brühzeit und/oder die erforderliche Brühtemperatur zu erhöhen ist, um die gewünschte Produktionsqualität zu erzielen. Die verlängerte Ausblutezeit sowie die Brühdauer wirken sich in der Regel negativ auf die Entfederungsleistung in der Entfederungsstation 14 aus. Auch hier ist folglich die Bearbeitungsdauer entsprechend anzupassen, was mittels der hierzu eingerichteten Steuereinrichtung auf Basis der vorgegebenen Soll-Abschnittslänge erfolgt.

Die Schlachtstation 12 umfasst einerseits Mittel zum Öffnen der Halsvenen sowie andererseits Mittel zum Ausbluten des Geflügels. Vorzugsweise ist derjenige Teil der Bearbeitungsabschnittslänge der Schlachtstation 12, der für das Eröffnen der Halsvenen eingerichtet ist, von invariabler Länge, während die Bearbeitungsabschnittslänge zum Ausbluten des Geflügels steuervariabel eingerichtet ist.

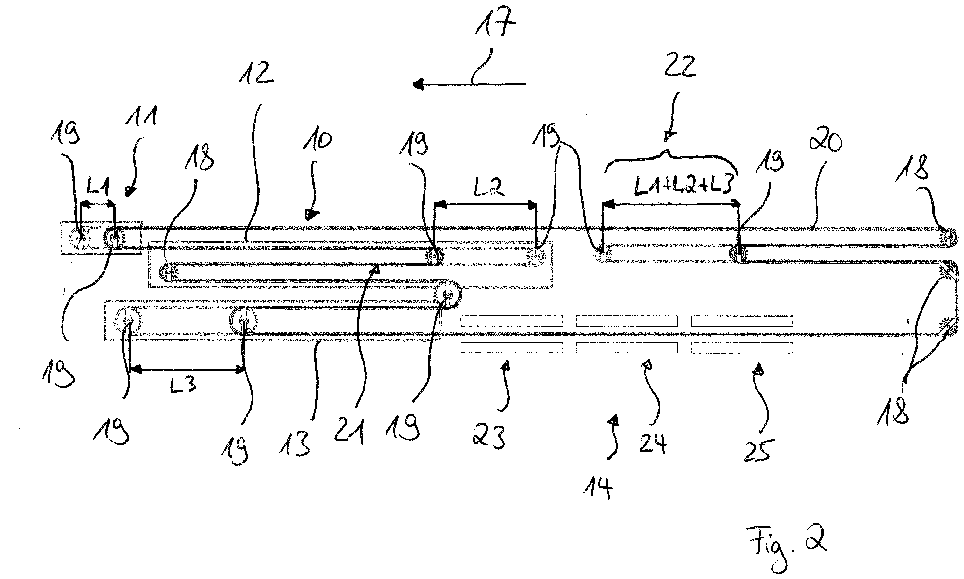

Wie in den Fig. 1 und 2 gezeigt, ist die Hängefördereinrichtung 10 vorzugsweise als ein umlaufender Endlosförderer ausgebildet. Der Endlosförderer wird mittels einer Mehrzahl an Förderelementen 18 geführt gehalten sowie über einige der Förderelemente 18 angetrieben. Die Förderelemente 18 sind vorzugsweise ortsfest angeordnet.

Zumindest die längenvariablen Abschnitte der Betäubungsstation 11, der Schlachtstation 12 und/oder der Brühstation 13 sind jeweils durch mindestens zwei Umlenkelemente 19 gebildet. Eine Förderkette 20 des Hängeförderers läuft zumindest teilweise um die jeweiligen Umlenkelemente 19. Vorzugsweise umschließt die Förderkette jedes der Umlenkelemente 19 halbkreisförmig, bildet also jeweils eine 180°-Umlenkung. Mindestens eines der Umlenkelemente 19 ist zur steuerbaren Änderung der Bearbeitungsabschnittslänge verfahrbar ausgebildet. Das jeweilige Umlenkelement 19 ist also nicht ortsfest, sondern vorzugsweise in oder entgegen der Förderrichtung 17 steuerbeweglich eingerichtet.

Wie bereits eingangs erwähnt, umfasst die Schlachtstation 12 zwei Abschnitte, nämlich einen zum Eröffnen der Halsvenen mit konstanter Bearbeitungsabschnittslänge sowie einen Ausbluteabschnitt 21 mit variabler Bearbeitungsabschnittslänge. Zum Verändern der Bearbeitungsabschnittslänge werden die Umlenkelemente 19 mittels elektrischem oder hydraulischem Antrieb in die jeweils erforderliche Position verfahren.

Vorteilhafterweise umfasst die Hängefördereinrichtung eine Kompensationseinrichtung 22, die eingerichtet ist, eine sich durch eine Änderung der Bearbeitungsabschnittslängen ergebende Änderung der Gesamtlänge der Förderstrecke zu kompensieren. Hierzu umfasst die Kompensationseinrichtung 22 wenigstens ein Förderelement 18 sowie mindestens eines der Umlenkelemente 19. In Fig. 2 ist beispielhaft die prinzipielle Funktionsweise der Kompensationseinrichtung 22 gezeigt.

Werden die jeweiligen Bearbeitungsabschnittslängen durch Verfahren der jeweiligen Umlenkelemente 19 verkürzt, so wird das Umlenkelement 19 der Kompensationseinrichtung 22 so verfahren, dass die in den jeweiligen Bearbeitungsstationen auftretende Verkürzung der Förderkette entsprechend kompensiert wird. Wird beispielsweise die Bearbeitungsabschnittslänge in der Betäubungsstation 11 und die Länge L1, die Bearbeitungsabschnittslänge im Ausbluteabschnitt 21 der Schlachtstation 12 um die Länge L2 und die Bearbeitungsabschnittslänge der Brühstation 13 um die Länge L3 verkürzt, so wird das Umlenkelement 19 der Kompensationseinrichtung 22 um eine Länge verfahren, die der Summe der Länge L1, L2 und L3 entspricht.

Die Bewegungsrichtung des Umlenkelements 19 der Kompensationseinrichtung 22 wird dabei jeweils so gewählt, dass die Gesamtlänge der Förderstrecke konstant oder im Wesentlichen konstant bleibt. Sofern sich durch eine Änderung der jeweiligen Bearbeitungsabschnittslängen der Bearbeitungsstationen in der Summe keine Änderung der Gesamtförderstreckenlänge ergibt, ist eine Kompensation der Förderstreckenlänge mittels der Kompensationseinrichtung 22 nicht erforderlich.

Die Kompensationseinrichtung 22 bildet also eine längenvariable Kompensationsstrecke zur Aufnahme der Förderkette. Das Förderelement 18 sowie das Umlenkelement 19 der Kompensationseinrichtung 22 bilden zwei Kompensationsstreckenumlenkelemente, deren Abstand zueinander die Länge der längenvariablen Kompensationsstrecke bestimmen. Zur steuerbaren Änderung der Kompensationsstreckenlänge ist mindestens eines der Kompensationsstreckenumlenkelemente, beispielsweise wie in Fig. 2 gezeigt das Umlenkelement 19 der Kompensationseinrichtung 22, positionsvariabel ausgebildet. Die Steuereinrichtung ist zur steuerbaren Änderung der Kompensationsstreckenlänge entsprechend ausgebildet und eingerichtet.

Vorzugsweise ist vorgesehen, dass die Steuereinrichtung die Kompensationseinrichtung 22 derart ansteuert, dass die Kompensationsstreckenlänge der Summe der Änderung der Bearbeitungsabschnittslängen der jeweiligen Bearbeitungsstationen entspricht.

Vorteilhafterweise sind die Längsabmessungen der jeweiligen Bearbeitungsförderabschnitte der Betäubungsstation 11, der Schlachtstation 12 sowie der Brühstation 13 jeweils größer als die jeweiligen Bearbeitungsabschnittslängen. Die Bearbeitungsförderabschnitte bezeichnen dabei jeweils diejenigen Teile der Förderstrecke entlang derer sich die jeweilige Bearbeitungsstation erstreckt und ein Einwirken mittels der jeweiligen Bearbeitungsstation auf das Geflügel erfolgt. Durch das zuvor beschriebene Verändern der jeweiligen Bearbeitungsabschnittslänge kann die jeweilige Verweildauer in einer der Bearbeitungsstationen steuervariabel angepasst werden.

Die Entfederungsstation 14 umfasst eine Mehrzahl an Entfederungswerkzeuggruppen 23, 24, 25. Jede der Entfederungswerkzeuggruppen 23, 24, 25 sind derart ansteuerbar eingerichtet, dass diese mit dem Geflügel in vorgegebenen Taktabschnitten des Bearbeitungsförderabschnitts in Bearbeitungskontakt kommen. In den Fig. 1 und 2 sind beispielhaft drei der Entfederungswerkzeuggruppen 23, 24, 25 gezeigt, die seriell entlang der Förderstrecke angeordnet sind.

Zur Steuerung der aktiven Bearbeitungsabschnittslänge der Entfederungsstation 14 wird mittels der Steuereinrichtung die Anzahl der mit dem Geflügel in Bearbeitungskontakt kommenden Entfederungswerkzeuggruppen 23, 24, 25 variabel eingestellt. Vorzugsweise sind hierzu die Entfederungswerkzeuggruppen 23, 24, 25 jeweils einzeln steuerbar aktivier- und deaktivierbar eingerichtet. Wird nur eine vergleichsweise kurze Bearbeitungsabschnittslänge der Entfederungsstation 14 benötigt, wird mittels der Steuereinrichtung nur eine der Entfederungswerkzeuggruppen 23, 24, 25 aktiviert und kommt mit dem Geflügel in Bearbeitungskontakt. Die übrigen der Entfederungswerkzeuggruppen 23, 24, 25 sind deaktiviert und kommen mit dem Geflügel nicht in Kontakt. Entsprechend der vorgegebenen Soll-Abschnittslänge für die Entfederungsstation 14 werden mittels der Steuereinrichtung gegebenenfalls weitere der Entfederungswerkzeuggruppen 23, 24, 25 zugeschaltet, um die Bearbeitungsabschnittslänge der Entfederungsstation 14 an die Sollvorgabe anzupassen.

Alternativ ist es möglich, den Werkzeugabstand mindestens einer der Entfederungswerkzeuggruppen 23, 24, 25 mittels der Steuereinrichtung zu verändern. Hierzu sind die Entfederungswerkzeuggruppen entsprechend steuerveränderlich eingerichtet. Anders ausgedrückt, ist der Abstand der Entfederungswerkzeuggruppen 23, 24, 25 zu der Förderstrecke veränderbar eingerichtet. Zur Einstellung der gewünschten Bearbeitungsabschnittslänge wird der Werkzeugabstand zumindest einiger der Entfederungswerkzeuggruppen 23, 24, 25 so eingestellt, dass entlang der vorgegebenen Bearbeitungsabschnittslänge eine entsprechende Anzahl an Entfederungswerkzeugen im Wirkbereich des Geflügels angeordnet ist. Die aufgrund der vorgegebenen Soll-Abschnittslänge nicht benötigten Werkzeuge der Entfederungswerkzeuggruppen 23, 24, 25 werden so positioniert, dass diese einen Werkzeugabstand zu der Förderstrecke einhalten, der groß genug ist, um ein Interagieren der Entfederungswerkzeuge mit Geflügel sicher auszuschließen.

Alternativ ist vorgesehen, die Fördergeschwindigkeit der Fördereinrichtung 17 entsprechend der gewünschten Verweildauer des Geflügels in der Entfederungsstation 14 anzupassen. Die Verweildauer des Geflügels korrespondiert mit einer vorgegebenen Soll-Abschnittslänge, die im Entfederungsprozess einzuhalten ist. Ist es beispielsweise gewünscht, die Soll-Abschnittslänge der Entfederungsstation 14 und damit die Verweildauer des Geflügels in der Entfederungsstation 14 zu erhöhen, so wird mittels der Steuereinrichtung die Fördergeschwindigkeit der Hängefördereinrichtung 10 entsprechend reduziert, um die gewünschte Verweildauer zu erreichen. Ist eine kürzere Verweilzeit in der Entfederungsstation 14 gewünscht, wird die Fördergeschwindigkeit entsprechend erhöht.

Um die reduzierte oder erhöhte Fördergeschwindigkeit der Hängefördereinrichtung 10 in den vorgeordneten Bearbeitungsstationen, nämlich der Betäubungsstation 11, der Schlachtstation 12 sowie der Brühstation 13, auszugleichen, ist die Steuereinrichtung eingerichtet, die jeweiligen Bearbeitungsabschnittslängen der vorgenannten Bearbeitungsstation entsprechend anzupassen. Auf diese Weise wird sichergestellt, dass die jeweiligen Verweildauern des Geflügels in der Betäubungsstation 11, der Schlachtstation 12 sowie der Brühstation 13 trotz einer Änderung der Fördergeschwindigkeit konstant bleibt. Auf diese Weise ist es möglich, Einstellungen der Entfederungsstation vorzunehmen, die mit einer Änderung der Fördergeschwindigkeit einhergehen, ohne dass dabei die in der Betäubungsstation 11, der Schlachtstation 12 und/oder der Brühstation 13 ablaufenden Verfahrensprozesse zu beeinflussen.

Vorzugsweise umfassen die Bearbeitungsstationen wenigstens eine der Entweidestationen 15. Die Entweidestationen sind zum Entfernen der Eingeweide des Geflügels eingerichtet. Hierzu sind jeweils an einem Rundläuferwerkzeugträger 26 zum Entweiden des Geflügels eingerichtete Bearbeitungswerkzeuge angeordnet. Die zugehörigen Bearbeitungsförderabschnitte sind dementsprechend kreisbogenförmig.

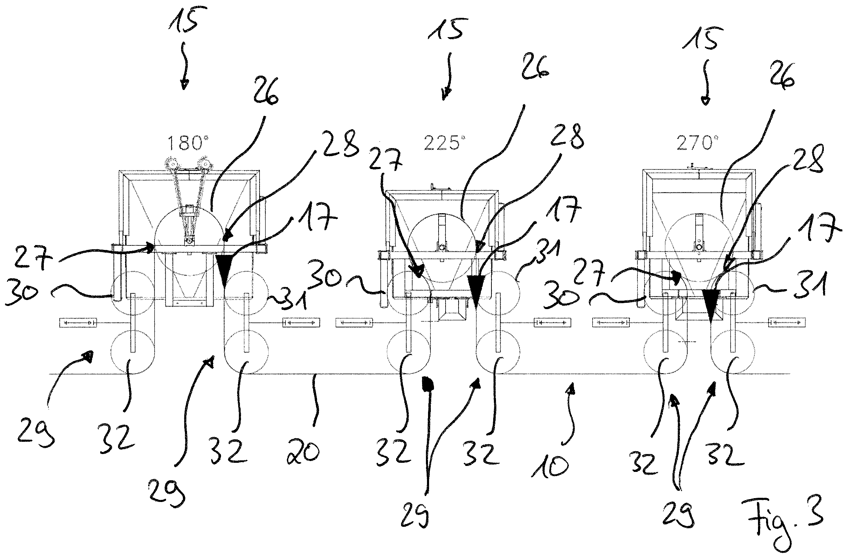

In Fig. 3 sind mehrere als Rundläufer eingerichtete Bearbeitungsstationen in serieller Anordnung beispielhaft dargestellt. Die jeweilige Bearbeitungsabschnittslänge ist steuervariabel eingerichtet, indem jeweils die Einlaufposition 27 und/oder die Auslaufposition 28 an dem jeweiligen Rundläuferwerkzeugträger 26 verändert wird.

Die in Fig. 3 gezeigten Entweidestationen 15 zeigen jeweils Betriebszustände mit unterschiedlichen Bearbeitungsabschnittslängen. Bei der links gezeigten Entweidestation 15 umläuft die Förderstrecke den Rundläuferwerkzeugträger 26 in einem 180°-Kreisbogen. Die Bearbeitungsabschnittslänge entspricht folglich der Länge der kreisbogenförmig geführten Förderstrecke mit einem Mittelpunktwinkel von 180°. Bestimmt wird die Kreisbogenlänge und damit die jeweilige Bearbeitungsabschnittslänge durch die Einlaufposition 27 und die Auslaufposition 28. Wie in der Fig. 3 zu erkennen, befindet sich die Einlaufposition 27 bei 9 Uhr, während die Auslaufposition 28 sich bei 3 Uhr befindet. Auf diese Weise kommt das Geflügel entlang eines 180°-Umlaufs um den Rundläuferwerkzeugträger 26 mit den - in der Zeichnung nicht gezeigten - Werkzeugen zum Entweiden in Kontakt.

Die mittlere der in Fig. 3 gezeigten Entweidestation weist - ebenso wie die linke Entweidestation 15 - eine Auslaufposition 28 auf 3 Uhr auf. Die Einlaufposition 27 ist hingegen auf 7:30 Uhr, so dass das zu entweidende Geflügel entlang eines 225°-Kreisbogenabschnitts umläuft. Die Bearbeitungsabschnittslänge der mittleren Entweidestation 15 entspricht damit der Länge eines Kreisbogens mit einem Mittelpunktwinkel von 225°.

Die Rechte der beispielhaft in Fig. 3 gezeigten Entweidestation 15 weist eine Einlaufposition 27 auf 7:30 Uhr sowie eine Auslaufposition 28 bei 4:30 Uhr auf. Das Geflügel umläuft damit den Rundläuferwerkzeugträger 26 entlang eines 270°-Kreisbogens.

Die in Fig. 3 gezeigten Einlauf- und Auslaufpositionen 27, 28 und die damit verbundenen Mittelpunktswinkel von 180°, 225° und 270° dienen ausschließlich der Veranschaulichung der vorliegenden Erfindung. Diese ist selbstverständlich nicht nur auf die in Fig. 3 gezeigten Bearbeitungsabschnittslängen beschränkt. Vielmehr ist es möglich, durch Variationen der Einlauf- und/oder Auslaufpositionen 27, 28 die Bearbeitungsabschnittslängen kontinuierlich zu wählen, indem der kreisbogenförmige Umlauf der Förderstrecke um den jeweiligen Rundlaufwerkzeugträger einen beliebigen Mittelpunktswinkel zwischen 180° und 270° aufweisen kann.

Wie in Fig. 3 gezeigt umfassen den Entweidestationen 15 jeweils Führungselemente 29. Die Führungselemente 29 sind verfahrbar eingerichtet, so dass die Einlauf- und/ oder Auslaufposition 27, 28 steuervariabel ist. Durch Verändern der Position der in Fig. 3 jeweils linksseitig gezeigten Führungselemente 29 wird die jeweilige Einlaufposition 27 gesteuert. Um die Auslaufposition 28 zu verändern, werden die in Fig. 3 rechtsseitig neben den Entweidestationen 15 angeordneten Führungselemente 29 gesteuert verfahren. Die Steuereinrichtung umfasst hierzu geeignete Stellmittel.

Die Führungselemente 29 umfassen vorzugsweise jeweils mindestens ein Einlaufführungsrad 30 sowie mindestens ein Auslaufführungsrad 31. Das Einlaufführungsrad 30 sowie das Auslaufführungsrad 31 sind als Bestandteile der Führungselemente 29 ebenfalls steuerbeweglich angeordnet. Die Einlaufführungsräder 30 sowie die Auslaufführungsräder 31 sind als Gegenlageelemente ausgebildet und eingerichtet, um die Förderkette 20 an dem Rundläuferwerkzeugträger 26 heranzuführen.

Der Bearbeitungsförderabschnitt umschließt die Bearbeitungswerkzeuge an dem jeweiligen Rundläuferwerkzeugträger 26 in einem Anlagewinkelbereich von mindestens 180° kreisbogenförmig. Ein Umschluss von 180° ist, wie bereits zuvor ausgeführt, in Fig. 3 in der linken Entweidestation 15 gezeigt. Größere Umschließungswinkel zeigen die mittlere Entweidestation mit 225° sowie die rechte Entweidestation 15 mit einem Umschließungswinkel von 270°. In Abhängigkeit des gewählten Durchmessers der Einlauf- und Auslaufführungsräder 30, 31 kann der Umschließungswinkel bzw. der Anlagewinkelbereich auch Winkelbeträge größer 270° aufweisen.

Vorzugsweise umfassen die Führungselemente 29 zusätzlich Umlenkräder 32, mit Hilfe derer die Förderkette 20 insbesondere um 90° umgelenkt wird. Um die Funktion der Einlaufführungsräder 30 sowie der Auslaufführungsräder 31 als Gegenlageelement zu erfüllen, sind diese vorzugsweise jeweils auf den den Bearbeitungswerkzeugen gegenüberliegenden Seiten des Bearbeitungsförderabschnitts angeordnet. Anders ausgedrückt verläuft die Förderstrecke zwischen den Führungselementen 29 und den Rundläuferwerkzeugträgern 26, die Rundläuferwerkzeugträger 26 sowie die Führungselemente 29 sind folglich bezüglich der Förderkette 20 jeweils in Gegenüberstellung angeordnet. Weiter bevorzugt sind sowohl das Einlaufführungsrad 30 als auch das Auslaufführungsrad 31 durch steuerbewegliches Verfahren eingerichtet, den Anlagewinkelbereich auf maximal 270° zu erhöhen.

In Figur 3 sind zur Vereinfachung nur drei der Entweidestationen 15 exemplarisch dargestellt. Die links abgebildete der Entweidestationen 15 ist als Kloakenschneider ausgebildet, die mittlere als Öffnungseinheit und die rechte als Ausnehmer zum Entfernen der Eingeweide. Vorteilhafter Weise sind weitere - in der Zeichnung nicht gezeigte - Entweidestationen 15 vorgesehen, beispielsweise ein Halsausnehmer zum Lösen der im Halsbereich liegenden Eingeweide, ein Halsbrecher, eine Inspektionsstation zum Überprüfen der vorangegangenen Bearbeitungsschritte sowie ein Wäscher zum Nachreinigen der ausgenommenen Geflügelschlachtkörper. Mittels der genannten Entweidestationen wird das Geflügel soweit bearbeitet, dass dieses die letzte bezüglich der Förderrichtung 17 stromabwärts angeordnete Entweidestationen 15 bratfertig verlässt.

In nachstehender Tabelle sind verschiedene vorgegebene Verweildauern bzw. Bearbeitungsdauern, die sich aus der mittels der Steuereinrichtung eingestellten jeweiligen Bearbeitungsabschnittslängen ergeben, beispielhaft wiedergegeben.

| | 1 | 2 | 3 |
|---|---|---|---|
| Kloakenschneider | 8 Sec. | 10 Sec. | 12 Sec. |
| Öffnungseinheit | 6 Sec. | 7 Sec. | 8 Sec. |
| Ausnehmer | 11 Sec. | 14 Sec. | 17 Sec. |
| Halsausnehmer | 11 Sec. | 14 Sec. | 17 Sec. |
| Halsbrecher | 8 Sec. | 10 Sec. | 12 Sec. |
| Inspektionsstation | 8 Sec | 10 Sec. | 12 Sec. |
| Wäscher | 8 Sec. | 10 Sec. | 12 Sec. |

Weiter bevorzugt umfasst die erfindungsgemäße Anordnung wenigstens eine Kühleinrichtung 33. Da das erfindungsgemäße Verfahren in analoger Weise zur Anordnung ebenfalls den Schritt des Kühlens des Geflügels mittels der Kühleinrichtung 33 umfasst, wird im Folgenden zur Vermeidung von Wiederholungen im Wesentlichen auf die erfindungsgemäße Anordnung eingegangen. Die folgenden Ausführungen die Anordnung betreffend gelten jedoch gleichermaßen für das erfindungsgemäße Verfahren.

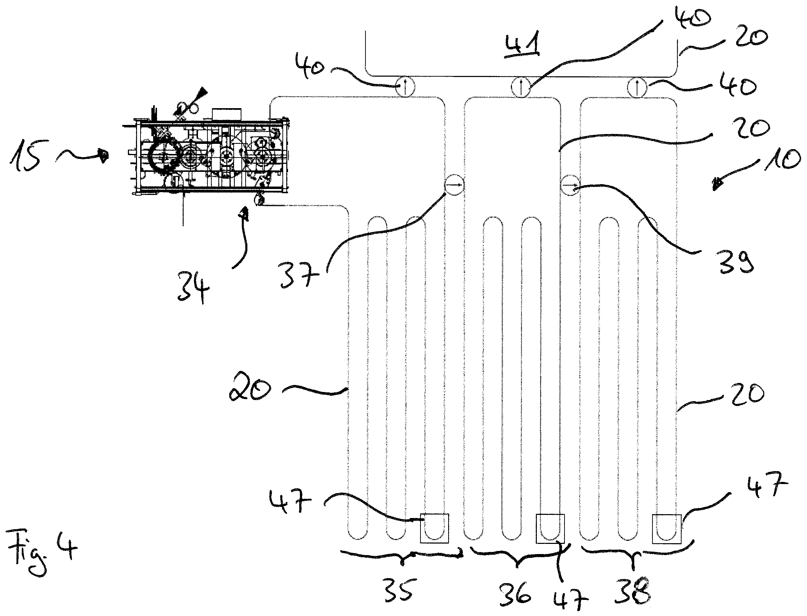

Fig. 4 zeigt eine beispielhafte Ausführung der Kühleinrichtung 33 in Draufsicht. Die Kühleinrichtung 33 umfasst eine Eingabestation 34, die zur Übergabe des Geflügels an eine erste Endloskühlline 35 ausgebildet und eingerichtet ist. Die Eingabestation 34 ist beispielsweise Bestandteil der Entweidestation 15, so dass das Geflügel nach dem Ausnehmen über die Eingabestation 34 zu der ersten Endloskühllinie 35 gelangt. Weiter umfasst die Kühleinrichtung 33 eine - in der Fig. 4 nicht gezeigte - Messeinrichtung zum Erfassen mindestens einer für die Kühlverweildauer des Geflügels relevanten Messgröße. Weiter ist mindestens eine zweite Endloskühlförderlinie 36 vorgesehen, die mittels einer ersten Transferstation 37 mit der ersten Endloskühllinie 35 zur steuerbaren Übergabe des Geflügels von der ersten Endloskühllinie 35 verbunden ist. Die Anzahl der Endloskühllinien richtet sich nach der benötigten Kühlleistung in Verbindung mit der gewünschten Durchsatzrate an Geflügel. Wie in Fig. 4 gezeigt, kann optional eine dritte Endloskühllinie 38 der zweiten Endloskühllinie 36 nachgeordnet sein. Die gesteuerte selektive Übergabe einzelnen Geflügelschlachtkörper erfolgt über eine zwischen der zweiten Endloskühllinie 36 und der dritten Endloskühllinie 38 angeordnete zweite Transferstation 39. Die Transferstationen 37 und 39 sind an die Steuereinrichtung entsprechend angebunden. Zur Übergabe des Geflügels an eine weitere nachgeordnete Bearbeitungsstation 41, die beispielsweise zum Sortieren und Verteilen des Geflügels einrichtet ist, sind an den jeweiligen Endloskühllinien 35, 36, 38 jeweils weitere Übergabestationen 40 zur steuerbaren Übergabe des Geflügels angeordnet.

Mittels einer Kühleinrichtungssteuerung, die beispielsweise Teil der Steuereinrichtung ist, wird auf Basis der für die Kühlverweildauer bestimmten relevanten Messgröße für jeden Geflügelkörper die erforderliche Kühlförderstrecke bestimmt. Auf Basis der bestimmten erforderlichen Kühlförderstrecke werden die erste Transferstation 37, die zweite Transferstation 39 sowie gegebenenfalls die weiteren Übergabestationen 40 derart angesteuert, dass jeder der Geflügelkörper die zuvor bestimmte erforderliche Kühlstrecke passiert. Auf diese Weise ist es möglich, die Geflügelschlachtkörper individuell so lange im Kühlprozess zu halten, bis der gewünschte Kühlzustand erreicht ist.

Als für die Kühlverweildauer des Geflügels relevante Messgrößen werden zumindest das Gewicht des Geflügelschlachtkörpers sowie dessen Temperatur, insbesondere dessen tiefe Muskeltemperatur, herangezogen. Die Messeinrichtung umfasst hierzu vorzugsweise eine Wägeeinrichtung zum Erfassen der Einzelgewichte der Geflügelschlachtkörper und/oder eine Geflügeltemperaturmesseinrichtung 47 zum Erfassen der Geflügeltemperatur. Auf Basis des Geflügelgewichts sowie der Geflügeltemperatur wird mittels der Kühleinrichtungssteuerung auf Basis vorbestimmter Kühlvorgaben die jeweilige Kühlverweildauer für jeden einzelnen Geflügelschlachtkörper ermittelt.

Mittels der Geflügeltemperaturmesseinrichtungen 47 erfolgt eine Überprüfung, ob die Geflügelschlachtkörper die vorgegebenen Soll-Temperatur erreicht haben und mittels der weiteren Übergabestationen 40 an die nachgeordneten Bearbeitungsstationen 41, also beispielsweise die Verteillinie 42, übergeben werden können. Sofern die gemessene Temperatur über der Sollvorgabe liegt, werden die Geflügelschlachtkörper mittels der ersten Transferstation 37 an die zweite Endloskühllinie 36 und ggf. an die dritte Endloskühllinie 38 übergeben, um die gewünschte Soll-Temperatur zu erreichen. In vielen Ländern ist eine zu erreichende Soll-Temperatur vorgeschrieben, sodass die Geflügeltemperaturmesseinrichtungen 47 vorteilhafter Weise nicht nur eine für die Kühlverweildauer des Geflügels relevante Messgröße für die Steuereinrichtung bereitstellen, sondern zusätzlich zur Qualitätssicherung des gesamten Kühlprozesses ausgewertet werden.

Als Ausgangsgrößen für die Bestimmung der erforderlichen Kühlverweildauer können neben den vorgenannten Größen weitere hinzutreten. Beispielsweise erfolgt die Geflügeltemperaturmessung periodisch während des Kühlprozesses oder aber initial bei oder vor der Übergabe des Geflügels mittels der Eingabestation 34 an die erste Endloskühllinie 35. Darüber hinaus können weitere Größen zur Bestimmung der erforderlichen Kühlverweildauer zugezogen werden - beispielsweise das Tierkörpervolumen, die Umgebungstemperatur bei den vorausgegangenen Verarbeitungsschritten sowie weitere Größen, die Einfluss auf die benötigte Kühlverweildauer haben. So ist es möglich beispielsweise auf Basis des ermittelten Gewichts sowie der bei der Übergabe an die erste Endloskühllinie 35 vorhandene tiefe Muskeltemperatur die benötigte Kühlverweildauer für jeden Geflügelschlachtkörper im Voraus zu bestimmen. Auf Basis dieser ermittelten Kühlverweildauer veranlasst die Kühleinrichtungssteuerung die jeweilige Transferstation 37, 39 sowie mindestens eine der weiteren Übergabestationen 40, entsprechende Übergaben der Geflügelschlachtkörper zu veranlassen, um den gewünschten Abkühlprozess gemäß den Sollvorgaben durchzuführen. Alternativ oder in Ergänzung ist vorgesehen, jeweils nach dem Durchlaufen einer der Endloskühllinien 35, 36, 38 die erreichte Gewebetemperatur der Schlachtgeflügelkörper zu ermitteln und durch Vergleich mit der Sollvorgabe zu entscheiden, ob der jeweilige Geflügelkörper an eine nachgeordnete Endloskühllinie zu übergeben ist, oder mittels der weiteren Übergabestationen 40 an die nachgeordnete Bearbeitungsstation 41 geschleust wird.

Nachstehende Tabelle gibt exemplarisch verschiedene Kühlverweildauern mit der jeweiligen Geflügeltemperatur an, die beim Durchlaufen einer entsprechenden Endloskühllinienanzahl erzielt werden.

| | Kühlline 1 | Kühlline 1 + 2 | Kühllinie 1+2+3 |
|---|---|---|---|
| Kühldauer | 30 Min. | 60 Min. | 90 Min. |
| Geflügeltemperatur | 6° C | 4 °C | 2 °C |

Insbesondere ist vorgesehen, dass die Fördergeschwindigkeit konstant oder im Wesentlichen konstant ist. Hierzu ist die Steuereinrichtung derart ausgebildet, dass als zentrale Sollvorgabe eine vorbestimmte Fördergeschwindigkeit vorgewählt wird, in deren Abhängigkeit - sofern erforderlich - die jeweiligen Bearbeitungsabschnittslängen wie zuvor beschrieben angepasst werden. Auf diese Weise wird eine gegenseitige Beeinflussung der einzelnen Bearbeitungsschritte vermieden.

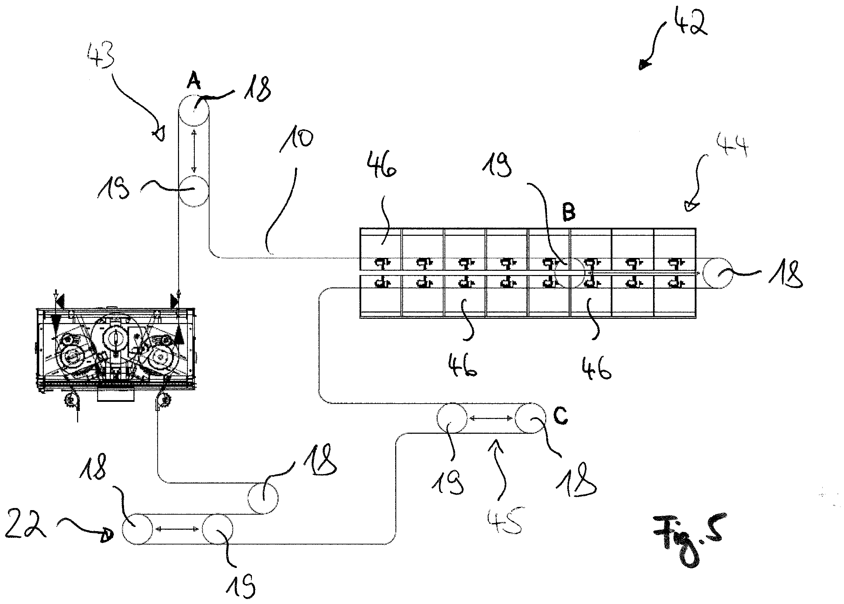

In der Figur 5 ist eine beispielhafte Verteillinie 42 gezeigt. Mittels der Verteilline 42 wird das Geflügel nach vorgegebenen Kriterien, insbesondere nach dessen Gewicht, verteilt. Die Verteillinie 42 umfasst beispielsweise eine erste Abgabestation 43, zweite Abgabestation 44 sowie eine dritte Abgabestation 45.

Die jeweiligen Abschnittslängen, entlang derer das Geflügel von der Händefördereinrichtung abgenommen und an die dafür vorgesehenen Abgabepositionen übergeben wird, ist mittels der Steuereinrichtung steuervariabel einstellbar eingerichtet.

Mögliche Übergabepositionen sind in Figur 5 mit den Buchstaben A, B und C gekennzeichnet. Erfolgen beispielsweise Übergaben an den Übergabestationen A und C so wird mittels der Steuereinrichtung die Bearbeitungsabschnittslänge der zweiten Abgabestation 44 entsprechend verkürzt, sodass die Übergabe der Geflügelschlachtkörper nur beispielsweise in 16 Übergabebereichen 46 erfolgt.

Soll keine Übergabe an den Übergabepositionen A und B stattfinden, so wird mittels der Steuereinrichtung die Bearbeitungsabschnittslänge der zweiten Abgabestation 44 entsprechend verlängert, sodass beispielsweise an 24 oder 32 der Übergabebereiche 46 eine Übergabe erfolgt.

Zur Vermeidung von Wiederholungen wird bezüglich des erfindungsgemäßen Verfahrens auf die zuvor gemachten Ausführungen im Zusammenhang mit der erfindungsgemäßen Anordnung verwiesen. Die erfindungsgemäßen Verfahrensschritte ergeben sich in analoger Weise aus der Figurenbeschreibung.

Der Schutzumfang der vorliegenden Erfindung wird durch die angefügten Ansprüche definiert.

## Patentansprüche

1. Anordnung zur Verarbeitung von Geflügel, umfassend
mindestens eine zum Fördern des Geflügels mit einer vorgegebenen Fördergeschwindigkeit eingerichtete, eine Förderstrecke bildende, Hängefördereinrichtung (10), die eingerichtet ist, das Geflügel an den Beinen hängend zu fördern,
eine Mehrzahl an entlang der Förderstrecke angeordneten Bearbeitungsstationen,
wobei die Förderstrecke zur Bearbeitung des Geflügels an jeder der Bearbeitungsstationen Bearbeitungsförderabschnitte aufweist,
**dadurch gekennzeichnet, dass**
wenigstens zwei Bearbeitungsabschnittslängen der Bearbeitungsförderabschnitte steuervariabel ausgebildet sind.

2. Anordnung nach Anspruch 1 **dadurch gekennzeichnet, dass** die Anordnung eine Steuereinrichtung umfasst, die eingerichtet ist, jeweils die Bearbeitungsabschnittslängen der Bearbeitungsförderabschnitte im laufenden Betrieb einzustellen.

3. Anordnung nach Anspruch 2, **dadurch gekennzeichnet, dass** die Steuereinrichtung weiter eingerichtet ist, beim Verändern einer der Bearbeitungsabschnittslängen, die jeweils übrigen der Bearbeitungsabschnittslängen auf Basis vorgegebener Soll-Abschnittslängen einzustellen.

4. Anordnung nach einem der Ansprüche 1 bis 3, **dadurch gekennzeichnet, dass** die Bearbeitungsstationen zumindest eine Betäubungsstation (11) zum Betäuben des Geflügels, eine Schlachtstation (12) zum Eröffnen der Halsvenen und zum Ausbluten des Geflügels sowie eine Brühstation (13) zum Brühen des Geflügels umfassen.

5. Anordnung nach einem der Ansprüche 1 bis 4, **dadurch gekennzeichnet, dass** die Hängefördereinrichtung (10) ein umlaufender Endlosförderer ist.

6. Anordnung nach Anspruch 5, **dadurch gekennzeichnet, dass** die längenvariablen Bearbeitungsabschnitte der Betäubungsstation (11), der Schlachtstation (12), und/oder der Brühstation (13) jeweils durch mindestens zwei Umlenkelemente (19) gebildet werden, um die eine Förderkette (20) des Hängeförderers (10) zumindest teilweise umläuft, wobei mindestens eines der Umlenkelemente (19) zur steuerbaren Änderung der Bearbeitungsabschnittslänge verfahrbar ausgebildet ist.

7. Anordnung nach Anspruch 6, **dadurch gekennzeichnet, dass** die Hängefördereinrichtung (10) eine Kompensationseinrichtung (22) umfasst, die eingerichtet ist, eine sich durch eine Änderung der Bearbeitungsabschnittlängen ergebende Änderungen der Gesamtlänge der Förderstrecke zu kompensieren.

8. Anordnung nach Anspruch 7, **dadurch gekennzeichnet, dass** die Kompensationseinrichtung (22) ein als Kompensationsstreckenumlenkelement ausgebildetes Umlenkelement (19) umfasst und so eine längenvariable Kompensationsstrecke zur Aufnahme der Förderkette (20) bildet, wobei das Kompensationsstreckenumlenkelement positionsvariabel zur steuerbaren Änderung der Kompensationsstreckenlänge ausgebildet ist.

9. Anordnung nach Anspruch 8, **dadurch gekennzeichnet, dass** die Steuereinrichtung eingerichtet ist, die Kompensationseinrichtung (22) derart anzusteuern, dass die Kompensationsstreckenlänge der Summe der Änderungen der Bearbeitungsabschnittslängen entspricht.

10. Anordnung nach einem der Ansprüche 4 bis 9, **dadurch gekennzeichnet, dass** die Betäubungsstation (11), die Schlachtstation (12) sowie die Brühstation (13) jeweils Längsabmessung aufweisen, die größer als die jeweiligen Bearbeitungsförderabschnitte sind.

11. Anordnung nach einem der Ansprüche 1 bis 10, **dadurch gekennzeichnet, dass** die Bearbeitungsstationen eine Entfederungsstation (14) zum Entfedern des Geflügels umfassen, wobei entlang des Bearbeitungsförderabschnitts der Entfederungsstation (14) einen Mehrzahl an Entfederungswerkzeuggruppen (23, 24, 25) angeordnet ist, die jeweils derart ansteuerbar eingerichtet sind, dass diese mit dem Geflügel in vorgegebenen Kontaktabschnitten des Bearbeitungsförderabschnitts in Bearbeitungskontakt kommen.

12. Anordnung nach Anspruch 11, **dadurch gekennzeichnet, dass** zum Verändern der Bearbeitungsabschnittslänge der Entfederungsstation (14) die Entfederungswerkzeuggruppen (23, 24, 25) einzeln steuerbar aktivier- und deaktivierbar eingerichtet sind.

13. Anordnung nach Anspruch 11, **dadurch gekennzeichnet, dass** zum Verändern der Bearbeitungsabschnittslänge der Entfederungsstation (14) der Werkzeugabstand mindestens einer der Entfederungswerkzeuggruppen (23, 24, 25) steuerveränderlich eingerichtet ist.

14. Anordnung nach einem der Ansprüche 1 bis 13, **dadurch gekennzeichnet, dass** die Bearbeitungsstationen wenigstens eine Entweidestation (15) zum Entfernen der Eingeweide des Geflügels umfassen, wobei die Bearbeitungswerkzeuge jeweils an einem Rundläuferwerkzeugträger (26) angeordnet sind und der Bearbeitungsförderabschnitt der Förderstrecke der wenigstens einen Entweidestation (15) dementsprechend kreisbogenförmig ist, wobei die Bearbeitungsabschnittslänge durch Veränderung der Einlauf- und/oder Auslaufposition (27, 28) des Bearbeitungsförderabschnitts am Rundläuferwerkzeugträger (26) steuervariabel eingerichtet ist.

15. Anordnung nach Anspruch 14, **dadurch gekennzeichnet, dass** die Einlauf- und/ oder Auslaufposition (27, 28) durch verfahrbar eingerichtete Führungselemente (29) steuervariabel eingerichtet sind.

16. Anordnung nach Anspruch 15, **dadurch gekennzeichnet, dass** die Führungselemente (29) jeweils mindestens ein Einlaufführungsrad (30) sowie mindestens ein Auslaufführungsrad (31) umfassen, die steuerbeweglich angeordnet sind.

17. Anordnung nach Anspruch 16, **dadurch gekennzeichnet, dass** der Bearbeitungsförderabschnitt die Bearbeitungswerkzeuge an dem Rundläuferwerkzeugträger (26) in einem Anlagewinkelbereich von mindestens 180° kreisbogenförmig umschließt.

18. Anordnung nach Anspruch 17, **dadurch gekennzeichnet, dass** das mindestens eine Einlaufführungsrad (30) sowie das mindestens eine Auslaufführungsrad (31) jeweils auf den den Bearbeitungswerkzeugen gegenüberliegenden Seiten des Bearbeitungsförderabschnitts angeordnet sind.

19. Anordnung nach Anspruch 18, **dadurch gekennzeichnet, dass** sowohl das Einlaufführungsrad (30) als auch das Auslaufführungsrad (31) durch steuerbewegliches Verfahren eingerichtet sind, den Anlagewinkelbereich auf maximal 270° zu erhöhen.

20. Anordnung nach einem der Ansprüche 1 bis 19 weiter umfassend wenigstens eine Kühleinrichtung (16) zum Kühlen des Geflügels, wobei die Kühleinrichtung (16) eine Eingabestation (34) zur Übergabe des Geflügels an eine erste Endloskühllinie (35),
eine Messeinrichtung zum Erfassen mindestens einer für die Kühlverweildauer des Geflügels relevanten Messgröße,
mindestens eine zweite Endloskühllinie (36), die mittels einer Transferstation (37, 39) mit der ersten Endloskühllinie (35) zur steuerbaren Übergabe des Geflügels von der ersten Endloskühllinie (35) an die zweite Endloskühllinie (36) verbunden ist,
an der ersten Endloskühllinie (35) und an der wenigsten zweiten Endloskühllinie (36) angeordnete zur steuerbaren Übergabe des Geflügels an eine weitere nachgeordnete Bearbeitungsstation (41) eingerichtete weitere Übergabestationen (40), sowie
eine Kühleinrichtungssteuerung, die eingerichtet ist, auf Basis der für die Kühlverweildauer relevanten Messgröße für jeden Geflügelkörper die erforderliche Kühlförderstrecke zu bestimmen und die Transferstation (37, 39) sowie die weiteren Übergabestationen (40) entsprechend anzusteuern, so dass der jeweilige Geflügelkörper die erforderliche Kühlförderstrecke passiert, aufweist.

21. Anordnung nach Anspruch 20, **dadurch gekennzeichnet, dass** die Messeinrichtung eine Wägeeinrichtung zum Erfassen der Einzelgewichte und/oder eine Geflügeltemperaturmesseinrichtung (47) zum Erfassen der Geflügeltemperatur umfasst, die eingerichtet sind die Einzelgewichte und/oder die Geflügeltemperatur als die für die Kühlverweildauer relevante Messgröße zu erfassen.

22. Anordnung nach einem der Ansprüche 1 bis 21, **dadurch gekennzeichnet, dass** die Fördergeschwindigkeit zumindest im Wesentlichen konstant ist.

23. Verfahren zur Verarbeitung von Geflügel, umfassend
Fördern des Geflügels mit einer vorgegebenen Fördergeschwindigkeit mittels einer, eine Förderstrecke bildenden, Hängefördereinrichtung (10), die eingerichtet ist, das Geflügel an den Beinen hängend zu fördern, wobei entlang der Förderstrecke eine Mehrzahl an Bearbeitungsstationen angeordnet sind, und die Förderstrecke zur Bearbeitung des Geflügels an jeder der Bearbeitungsstationen Bearbeitungsförderabschnitte aufweist,
**gekennzeichnet durch**
gesteuertes Einstellen wenigstens zweier Bearbeitungsabschnittslängen der Bearbeitungsförderabschnitte.

24. Verfahren nach Anspruch 23 **dadurch gekennzeichnet, dass** jeweils die Bearbeitungsabschnittslängen der Bearbeitungsförderabschnitte im laufenden Betrieb mittels einer Steuereinrichtung eingestellt werden.

25. Verfahren nach Anspruch 24, **gekennzeichnet dadurch, dass** beim Verändern einer der Bearbeitungsabschnittslängen die jeweils übrigen der Bearbeitungsabschnittslängen auf Basis vorgegebener Soll-Abschnittslängen mittels der Steuereinrichtung angepasst und eingestellt werden.

26. Verfahren nach einem der Ansprüche 23 bis 25, **dadurch gekennzeichnet, dass** die Bearbeitungsstationen zumindest eine Betäubungsstation (11) zum Betäuben des Geflügels, eine Schlachtstation (12) zum Eröffnen der Halsvenen und zum Ausbluten des Geflügels sowie eine Brühstation (13) zum Brühen des Geflügels umfassen.

27. Verfahren nach einem der Ansprüche 23 bis 26, **dadurch gekennzeichnet, dass** die Hängefördereinrichtung (10) ein umlaufender Endlosförderer ist.

28. Verfahren nach Anspruch 27, **dadurch gekennzeichnet, dass** die längenvariablen Bearbeitungsabschnitte der Betäubungsstation (11), der Schlachtstation (12), und/oder der Brühstation (13) jeweils durch mindestens zwei Umlenkelemente (19) gebildet werden, um die eine Förderkette (20) des Hängeförderers (10) zumindest teilweise umläuft, und mindestens eines der Umlenkelemente (19) zur steuerbaren Änderung der Bearbeitungsabschnittslänge verfahren wird.

29. Verfahren nach Anspruch 28, **gekennzeichnet durch** Kompensieren einer sich durch eine Änderung der Bearbeitungsabschnittlängen ergebenden Änderung der Gesamtlänge der Förderstrecke mittels einer Kompensationseinrichtung (22).

30. Verfahren nach Anspruch 29, **dadurch gekennzeichnet, dass** die Kompensationseinrichtung (22) ein als Kompensationsstreckenumlenkelement ausgebildetes Umlenkelement (19) umfasst und so eine längenvariable Kompensationsstrecke zur Aufnahme der Förderkette (20) bildet, wobei die Position des Kompensationsstreckenumlenkelements zur steuerbaren Änderung der Kompensationsstreckenlänge variiert wird.

31. Verfahren nach Anspruch 30, **gekennzeichnet durch** Ansteuern der Kompensationseinrichtung (22) mittels der Steuereinrichtung derart, dass die Kompensationsstreckenlänge der Summe der Änderungen der Bearbeitungsabschnittslängen entspricht.

32. Verfahren nach einem der Ansprüche 26 bis 31, **dadurch gekennzeichnet, dass** die Betäubungsstation (11), die Schlachtstation (12) sowie die Brühstation (13) jeweils Längsabmessung aufweisen, die größer als die jeweiligen Bearbeitungsförderabschnitte sind.

33. Verfahren nach einem der Ansprüche 23 bis 32, **dadurch gekennzeichnet, dass** die Bearbeitungsstationen eine Entfederungsstation (14) zum Entfedern des Geflügels umfassen, wobei entlang des Bearbeitungsförderabschnitts der Entfederungsstation (14) einen Mehrzahl an Entfederungswerkzeuggruppen (23, 24, 25) angeordnet sind, wobei die Entfederungswerkzeuge jeweils derart angesteuert werden, dass diese mit dem Geflügel in vorgegebenen Kontaktabschnitten des Bearbeitungsförderabschnitts in Bearbeitungskontakt kommen.

34. Verfahren nach Anspruch 33, **dadurch gekennzeichnet, dass** zum Verändern der Bearbeitungsabschnittslänge der Entfederungsstation (14) die Entfederungswerkzeuggruppen (23, 24, 25) einzeln vorgewählt mittels der Steuereinrichtung aktiviert oder deaktiviert werden.

35. Verfahren nach Anspruch 33, **dadurch gekennzeichnet, dass** zum Verändern der Bearbeitungsabschnittslänge der Entfederungsstation (14) der Werkzeugabstand mindestens einer der Entfederungswerkzeuggruppen (23, 24, 25) mittels der Steuereinrichtung verändert wird.

36. Verfahren nach einem der Ansprüche 23 bis 35, **dadurch gekennzeichnet, dass** die Bearbeitungsstationen wenigstens eine Entweidestation (15) zum Entfernen der Eingeweide des Geflügels umfassen, wobei die Bearbeitungswerkzeuge jeweils an einem Rundläuferwerkzeugträger (26) angeordnet sind und der Bearbeitungsförderabschnitt der Förderstrecke der wenigstens einen Entweidestation (15) dementsprechend kreisbogenförmig ist, wobei die Bearbeitungsabschnittslänge durch gesteuertes Verändern der Einlauf- und/oder Auslaufposition (27, 28) des Bearbeitungsförderabschnitts am Rundläuferwerkzeugträger (26) mittels der Steuereinrichtung eingestellt wird.

37. Verfahren nach Anspruch 36, **dadurch gekennzeichnet, dass** die Einlauf- und/ oder Auslaufposition (27, 28) durch das Verfahren von Führungselementen (29) mittels der Steuereinrichtung gesteuert wird.

38. Verfahren nach Anspruch 37, **dadurch gekennzeichnet, dass** die Führungselemente (29) jeweils mindestens ein Einlaufführungsrad (30) sowie mindestens ein Auslaufführungsrad (31) umfassen, die steuerbeweglich angeordnet sind.

39. Verfahren nach Anspruch 38, **dadurch gekennzeichnet, dass** der Bearbeitungsförderabschnitt die Bearbeitungswerkzeuge an dem Rundläuferwerkzeugträger (26) in einem Anlagewinkelbereich von mindestens 180° kreisbogenförmig umschließt.

40. Verfahren nach Anspruch 39, **dadurch gekennzeichnet, dass** das mindestens eine Einlaufführungsrad (30) sowie das mindestens eine Auslaufführungsrad (31) jeweils auf den den Bearbeitungswerkzeugen gegenüberliegenden Seiten des Bearbeitungsförderabschnitts angeordnet sind.

41. Verfahren nach Anspruch 40, **gekennzeichnet dadurch, dass** durch steuerbewegliches Verfahren des Einlaufführungsrades (30) und des Auslaufführungsrades (31) der Anlagewinkelbereich auf maximal 270° erhöht wird.

42. Verfahren nach einem der Ansprüche 23 bis 41 weiter umfassend die Schritte:
Kühlen des Geflügels mittels einer Kühleinrichtung (16),
Übergeben des Geflügels mittels einer Eingabestation (34) an eine erste Endloskühllinie (35),
Erfassen mindestens einer für die Kühlverweildauer des Geflügels relevanten Messgröße mittels einer Messeinrichtung,
wobei die Kühleinrichtung (33) mindestens eine zweite Endloskühllinie (36) umfasst, die mittels einer Transferstation (37, 39) mit der ersten Endloskühllinie (35) zur steuerbaren Übergabe des Geflügels von der ersten Endloskühllinie (35) an die zweite Endloskühllinie (36) verbunden ist, und wobei
an der ersten Endloskühllinie (35) und an der wenigsten zweiten Endloskühllinie (36) zur steuerbaren Übergabe des Geflügels an eine weitere nachgeordnete Bearbeitungsstation (41) eingerichtete weitere Übergabestationen (40) angeordnet sind, und
Bestimmen der für jeden Geflügelkörper erforderlichen Kühlförderstrecke auf Basis der für die Kühlverweildauer relevanten Messgröße und entsprechendes Ansteuern der Transferstation (37, 39) sowie der weiteren Übergabestationen (40), so dass der jeweilige Geflügelkörper die erforderliche Kühlförderstrecke passiert.

43. Verfahren nach Anspruch 42, **dadurch gekennzeichnet, dass** als für die Kühlverweildauer relevante Messgröße Einzelgewichte mittels einer Wägeeinrichtung und/oder die Geflügeltemperatur mittels einer Geflügeltemperaturmesseinrichtung (47) erfasst werden.

44. Verfahren nach einem der Ansprüche 23 bis 43, **dadurch gekennzeichnet, dass** die Fördergeschwindigkeit zumindest im Wesentlichen konstant ist.

## Claims

1. Arrangement for processing poultry, comprising
at least one overhead conveyor device (10) which is designed for conveying the poultry with a predefined conveying speed, forms a conveyor line and is configured for transporting the poultry suspended by the legs,
a plurality of processing stations arranged along the conveyor line,
wherein the conveyor line has processing conveyor portions at each of the processing stations for processing the poultry,
**characterised in that**
at least two processing portion lengths of the processing conveyor portions are configured to be controlledly variable.

2. Arrangement according to claim 1, **characterised in that** the arrangement comprises a control device which is configured to adjust the processing portion lengths of the processing conveyor portions during operation.

3. Arrangement according to claim 2, **characterised in that** the control device is furthermore configured, on a change of one of the processing portion lengths, to adjust the other processing portion lengths on the basis of predefined nominal portion lengths.

4. Arrangement according to any of claims 1 to 3, **characterised in that** the processing stations comprise at least one stunning station (11) for stunning the poultry, a slaughtering station (12) for opening the jugular vein and for bleeding the poultry, and a scalding station (13) for scalding the poultry.

5. Arrangement according to of claims 1 to 4, **characterised in that** the overhead conveying device (10) is a rotating continuous conveyor.

6. Arrangement according to claim 5, **characterised in that** the variable length processing portions of the stunning station (11), the slaughtering station (12) and/or the scalding station (13) are each formed by at least two deflecting elements (19), around which a conveying chain (20) of the overhead conveyor (10) runs at least partially, wherein at least one of the deflecting elements (19) is configured so as to be movable for controllably modification of the processing portion length.

7. Arrangement according to claim 6, **characterized in that** the overhead conveying device (10) comprises a compensation device (22) which is configured to compensate for a change in the overall length of the conveyor line caused by a change in the processing portion lengths.

8. Arrangement according to claim 7, **characterised in that** the compensation device (22) comprises a deflection element (19) designed as a compensation line deflecting element and thus forms a variable length compensation line for receiving the conveying chain (20), wherein the compensation line deflecting element is configured so as to be position-variable for controllable change of the compensation line length.

9. Arrangement according to claim 8, **characterised in that** the control device is configured to control the compensation device (22) such that the compensation line length corresponds to the sum of the changes in the processing portion lengths.

10. Arrangement according to any one of claims 4 to 9, **characterised in that** the stunning station (11), the slaughtering station (12) and the scalding station (13) each have length dimensions which are greater than the respective processing conveyor portions.

11. An arrangement according to any one of claims 1 to 10, **characterised in that** the processing stations comprise a defeathering station (14) for defeathering the poultry, wherein along the processing conveyor portion of the defeathering station (14), a plurality of defeathering tool groups (23, 24, 25) is arranged which are each configured controllably such that they come into processing contact with the poultry in predefined contact portions of the processing conveyor portion.

12. Arrangement according to claim 11, **characterised in that** the defeathering tool groups (23, 24, 25) are configured as to be individually controllably activatable and deactivatable to change the processing portion length of the defeathering station (14).

13. Arrangement according to claim 11, **characterised in that** the tool spacing of at least one of the defeathering tool groups (23, 24, 25) is configured to be controlledly variable to change the processing portion length of the defeathering station (14).

14. Arrangement according to any one of the claims 1 to 13, **characterised in that** the processing stations comprise at least one gutting station (15) for removing the internal organs of the poultry, wherein the processing tools are each arranged on a carousel-type tool carrier (26), and the processing conveyor portion of the conveyor line of the at least one gutting station (15) is according arcuate, wherein the processing portion length is configured so as to be controlledly variable by changing the infeed and/or exit positions (27, 28) of the processing conveyor portion at the carousel-type tool carrier (26).

15. Arrangement according to claim 14, **characterised in that** the infeed and/or exit positions (27, 28) are configured so as to be controlledly variable by movably configured guiding elements (29).

16. Arrangement according to claim 15, **characterised in that** the guiding elements (29) each comprise at least one infeed guiding wheel (30) and at least one exit guiding wheel (31), which are arranged so as to be controlledly movable.

17. Arrangement according to claim 16, **characterised in that** the processing conveyor portion surrounds the processing tools on the carousel-type tool carrier (26) in arcuate fashion over a contact angle region of at least 180°.

18. Arrangement according to claim 17, **characterised in that** the at least one infeed guiding wheel (30) and the at least one exit guiding wheel (31) are each arranged on the sides of the processing conveyor portion opposite the processing tools.

19. Arrangement according to claim 18, **characterised in that** both the infeed guiding wheel (30) and the exit guiding wheel (31) are configured, by controlled movement, to increase the contact angle region to a maximum of 270°.

20. Arrangement according to any one of claims 1 to 19 further comprising at least one cooling device (16) for cooling the poultry, the cooling device (16) comprises
an entry station (34) for handover of the poultry to a first continuous cooling line (35),
a measuring device for detecting at least one measured parameter relevant for the cooling holding period of the poultry,
at least one second continuous cooling line (36), which is connected by means of a transfer station (37, 39) to the first continuous cooling line (35) for controlled handover of the poultry from the first continuous cooling line (35) to the second continuous cooling line (36),
further handover stations (40) arranged on the first continuous cooling line (35) and on the least second continuous cooling line (36) for controllable handover of the poultry to a further downstream processing station (41), as well as
a cooling device control system, which is configured to determine the necessary cooling conveyor path for each poultry body on the basis of the measured parameter relevant for the cooling holding period and to activate the transfer station (37, 39) and the further handover stations (40) accordingly, so that the respective poultry body passes along the necessary cooling conveyor path.

21. Arrangement according to claim 20, **characterised in that** the measuring device is a weighing device for detecting the individual weights and/or a poultry temperature measuring device (47) for detecting the poultry temperature, which are configured to detect the individual weights and/or the poultry temperature as the measured parameter relevant for the cooling holding period.

22. Arrangement according to any one of claims 1 to 21, **characterised in that** the conveying speed is at least substantially constant.

23. Method for processing poultry, comprising
conveying the poultry at a predefined conveying speed by means of an overhead conveying device (10) which forms a conveying line and is configured to convey the poultry suspended by the legs, wherein a plurality of processing stations are arranged along the conveying line, and the conveying line has processing conveying portions at each of the processing stations for processing the poultry,
**characterised by**
controlled adjustment of at least two processing portion lengths of the processing conveying portions.

24. Method according to claim 23, **characterised in that** the respective processing portion lengths of the processing conveying portions are adjusted during operation by means of a control operation.

25. Method according to claim 24, **characterised in that** on a change of one of the processing portion lengths, the respective remaining processing portion lengths are adapted and adjusted by means of the control device on the basis of predefined nominal portion lengths.

26. Method according to any one of claims 23 to 25, **characterised in that** the processing stations comprise at least a stunning station (11) for stunning the poultry, a slaughtering station (12) for opening the jugular vein and for bleeding the poultry, and a scalding station (13) for scalding the poultry.

27. Method according to any one of claims 23 to 26, **characterised in that** the overhead conveying device (10) is a rotating continuous conveyor.

28. Method according to claim 27, **characterised in that** the variable length processing portions of the stunning station (11), the slaughtering station (12) and/or the scalding station (13) are each formed by at least two deflecting elements (19) around which a conveying chain (20) of the overhead conveyor (10) runs at least partially, and at least one of the deflection elements (19) is moved for controllable modification of the processing portion length.

29. Method according to claim 28, **characterised by** compensation by means of a compensation device (22) for a change in the overall length of the conveyor line caused by a change in the processing portion lengths.

30. Method according to claim 29, **characterised in that** the compensation device (22) comprises a deflecting element (19) configured as a compensation line deflecting element, and thus forms a variable length compensation line for receiving the conveying chain (20), wherein the position of the compensation line deflecting element is varied for controllable change of the compensation line length.

31. Method according to claim 30, **characterised by** control of the compensation device (22) by means of the control device such that the compensation line length corresponds to the sum of the changes in the processing portion lengths.

32. Method according to any one of claims 26 to 31, **characterised in that** the stunning station (11), the slaughtering station (12) and the scalding station (13) each have length dimensions which are greater than the respective processing conveyor portions.

33. Method according to any one of claims 23 to 32, **characterised in that** the processing stations comprise a defeathering station (14) for defeathering the poultry, wherein a plurality of defeathering tool groups (23, 24, 25) is arranged along the processing conveyor portion of the defeathering station (14), wherein the defeathering tools are controlled such that they come into processing contact with the poultry in predefined contact portions of the processing conveyor portion.

34. Method according to claim 33, **characterised in that** to change the processing portion length of the defeathering station (14), the defeathering tool groups (23, 24, 25) are configured so as to be activated or deactivated, by individual preselection, by means of the control device.

35. Method according to claim 33, **characterised in that** to change the processing portion length of the defeathering station (14), the tool spacing of at least one of the defeathering tool groups (23, 24, 25) is changed by means of the control device.

36. Method according to any one of claims 23 to 35, **characterised in that** the processing stations comprise at least one gutting station (15) for removing the internal organs from the poultry, wherein the processing tools are each arranged on a carousel-type tool carrier (26) and the processing conveyor portion of the conveyor line of the at least one gutting station (15) is accordingly arcuate, wherein the processing portion length is adjusted by means of the control device by controlled changing of the infeed and/or exit positions (27, 28) of the processing conveyor portions on the carousel-type tool carrier (26).

37. Method according to claim 36, **characterised in that** the infeed and/ or exit positions (27, 28) are controlled by movement of the guiding elements (29) by the control device.

38. Method according to claim 37, **characterised in that** the guiding elements (29) each comprise at least one infeed guiding wheel (30) and at least one exit guiding wheel (31), which are arranged to be controlledly movable.

39. Method according to claim 38, **characterised in that** the processing conveyor portion surrounds the processing tools at the carousel-type tool carrier (26) in a arcuate fashion over a contact angle regions of at least 180°.

40. Method according to claim 39, **characterised in that** the at least one infeed guiding wheel (30) and the at least one exit guiding wheel (31) are each arranged on the sides of the processing conveyor portion opposite the processing tools.

41. Method according to claim 40, **characterised in that** the contact angle region is increased to a maximum of 270° by controlled movement of the infeed guiding wheel (30) and the exit guiding wheel (31).

42. Method according to any one of claims 23 to 41 further comprising the steps:
cooling the poultry by means of a cooling device (16),
handover of the poultry by means of an entry station (34) to a first continuous cooling line (35),
detection of at least one measured parameter relevant for the cooling holding period of the poultry by means of a measurement device,
wherein the cooling device (33) comprises at least a second continuous cooling line (36) which is connected to the first continuous cooling line (35) by means of a transfer station (37, 39) for controllable handover of the poultry from the first continuous cooling line (35) to the second continuous cooling line (36), and wherein
further handover stations (40) are arranged on the first continuous cooling line (35) and on the at least second continuous cooling line (36) for controllable handover of the poultry to a further downstream processing station (41), and
determination of the cooling conveyor path necessary for each poultry body on the basis of the measured parameter relevant to the cooling holding period, and corresponding control of the handover station (37, 39) and the further handover stations (40), such that the respective poultry body passes along the necessary cooling conveyor path.

43. Method according to claim 42, **characterised in that** as measured parameters relevant for the cooling holding period, individual weights are determined by means of a weighing device and/or the poultry temperature is determined by means of a poultry temperature measuring device (47).

44. Method according to any one of claims 23 to 43, **characterised in that** the conveying speed is at least substantially constant.

## Revendications

1. Agencement pour le traitement de volailles, comprenant
au moins un dispositif de transport suspendu (10), adapté pour transporter la volaille à une vitesse de transport prédéfinie, formant un parcours de transport, qui est adapté pour transporter la volaille suspendue par les pattes,
une pluralité de stations de traitement agencées le long du parcours de transport,
le parcours de transport pour le traitement de la volaille présentant des sections de transport de traitement à chacune des stations de traitement,
**caractérisé en ce que**
au moins deux longueurs de sections de traitement des sections de transport de traitement sont configurées sous forme variable par commande.

2. Agencement selon la revendication 1, **caractérisé en ce que** l'agencement comprend un dispositif de commande qui est adapté pour régler respectivement les longueurs de section de traitement des sections de transport de traitement en cours de fonctionnement.

3. Agencement selon la revendication 2, **caractérisé en ce que** le dispositif de commande est en outre adapté, lors de la modification de l'une des longueurs de section de traitement, pour régler les autres longueurs de section de traitement respectives sur la base de longueurs de section de consigne prédéfinies.

4. Agencement selon l'une quelconque des revendications 1 à 3, **caractérisé en ce que** les stations de traitement comprennent au moins une station d'étourdissement (11) pour étourdir la volaille, une station d'abattage (12) pour ouvrir les veines du cou et saigner la volaille, et une station d'échaudage (13) pour échauder la volaille.

5. Agencement selon l'une quelconque des revendications 1 à 4, **caractérisé en ce que** le dispositif de transport suspendu (10) est un transporteur rotatif sans fin.

6. Agencement selon la revendication 5, **caractérisé en ce que** les sections de traitement de longueur variable de la station d'étourdissement (11), de la station d'abattage (12) et/ou de la station d'échaudage (13) sont formées respectivement par au moins deux éléments de renvoi (19) autour desquels une chaîne de transport (20) du transporteur suspendu (10) tourne au moins partiellement, au moins l'un des éléments de renvoi (19) étant configuré sous forme déplaçable pour modifier de manière commandable la longueur de section de traitement.

7. Agencement selon la revendication 6, **caractérisé en ce que** le dispositif de transport suspendu (10) comprend un dispositif de compensation (22) qui est adapté pour compenser une modification de la longueur totale du parcours de transport résultant d'une modification des longueurs de section de traitement.

8. Agencement selon la revendication 7, **caractérisé en ce que** le dispositif de compensation (22) comprend un élément de renvoi (19) configuré sous la forme d'un élément de renvoi du parcours de compensation et forme ainsi un parcours de compensation de longueur variable pour recevoir la chaîne de transport (20), l'élément de renvoi du parcours de compensation étant configuré avec une position variable pour modifier de manière commandable la longueur du parcours de compensation.

9. Agencement selon la revendication 8, **caractérisé en ce que** le dispositif de commande est adapté pour commander le dispositif de compensation (22) de telle sorte que la longueur du parcours de compensation corresponde à la somme des modifications des longueurs de section de traitement.

10. Agencement selon l'une quelconque des revendications 4 à 9, **caractérisé en ce que** la station d'étourdissement (11), la station d'abattage (12) et la station d'échaudage (13) présentent chacune des dimensions longitudinales supérieures aux sections de transport de traitement respectives.

11. Agencement selon l'une quelconque des revendications 1 à 10, **caractérisé en ce que** les stations de traitement comprennent une station de plumage (14) pour plumer la volaille, une pluralité de groupes d'outils de plumage (23, 24, 25) étant agencés le long de la section de transport de traitement de la station de plumage (14), qui sont chacun adaptés de manière commandable de telle sorte que ceux-ci viennent en contact de traitement avec la volaille dans des sections de contact prédéfinies de la section de transport de traitement.

12. Agencement selon la revendication 11, **caractérisé en ce que**, pour modifier la longueur de section de traitement de la station de plumage (14), les groupes d'outils de plumage (23, 24, 25) sont adaptés de manière à pouvoir être activés et désactivés individuellement de manière commandable.

13. Agencement selon la revendication 11, **caractérisé en ce que**, pour modifier la longueur de section de traitement de la station de plumage (14), l'écartement des outils d'au moins un des groupes d'outils de plumage (23, 24, 25) est adapté de manière à pouvoir être modifié par commande.

14. Agencement selon l'une quelconque des revendications 1 à 13, **caractérisé en ce que** les stations de traitement comprennent au moins une station d'éviscération (15) pour enlever les viscères de la volaille, les outils de traitement étant chacun agencés sur un support d'outil circulaire (26) et la section de transport de traitement du parcours de transport de l'au moins une station d'éviscération (15) étant en conséquence en forme d'arc de cercle, la longueur de section de traitement étant adaptée de manière variable par commande en modifiant la position d'entrée et/ou de sortie (27, 28) de la section de transport de traitement sur le support d'outil circulaire (26).

15. Agencement selon la revendication 14, **caractérisé en ce que** la position d'entrée et/ou de sortie sont adaptées de manière variable par commande par des éléments de guidage (29) adaptés sous forme déplaçable.

16. Agencement selon la revendication 15, **caractérisé en ce que** les éléments de guidage (29) comprennent chacun au moins une roue de guidage d'entrée (30) ainsi qu'au moins une roue de guidage de sortie (31), qui sont agencées de manière mobile par commande.

17. Agencement selon la revendication 16, **caractérisé en ce que** la section de transport de traitement entoure les outils de traitement sur le support d'outil circulaire (26) en forme d'arc de cercle dans une zone angulaire d'appui d'au moins 180°.

18. Agencement selon la revendication 17, **caractérisé en ce que** l'au moins une roue de guidage d'entrée (30) ainsi que l'au moins une roue de guidage de sortie (31) sont agencées respectivement sur les côtés de la section de transport de traitement opposés aux outils de traitement.

19. Agencement selon la revendication 18, **caractérisé en ce que** la roue de guidage d'entrée (30) et la roue de guidage de sortie (31) sont toutes deux adaptées pour augmenter la zone angulaire d'appui à un maximum de 270° par déplacement mobile par commande.

20. Agencement selon l'une quelconque des revendications 1 à 19, comprenant en outre au moins un dispositif de refroidissement (16) pour refroidir la volaille, le dispositif de refroidissement (16) présentant une station d'entrée (34) pour le transfert de la volaille vers une première ligne de refroidissement sans fin (35),
un dispositif de mesure pour détecter au moins une grandeur de mesure pertinente pour le temps de séjour de refroidissement de la volaille,
au moins un deuxième ligne de refroidissement sans fin (36), qui est reliée au moyen d'une station de transfert (37, 39) à la première ligne de refroidissement sans fin (35) pour le transfert commandable de la volaille de la première ligne de refroidissement sans fin (35) à la deuxième ligne de refroidissement sans fin (36),
des stations de transfert supplémentaires (40) agencées sur la première ligne de refroidissement sans fin (35) et sur l'au moins une deuxième ligne de refroidissement sans fin (36), adaptées pour le transfert commandable de la volaille à une autre station de traitement (41) agencée en aval, ainsi que
une commande de dispositif de refroidissement qui est adaptée pour déterminer, sur la base de la grandeur de mesure pertinente pour le temps de séjour de refroidissement, le parcours de transport de refroidissement nécessaire pour chaque carcasse de volaille et pour commander en conséquence la station de transfert (37, 39), ainsi que les autres stations de transfert (40), de sorte que la carcasse de volaille respective passe par le parcours de transport de refroidissement nécessaire.

21. Agencement selon la revendication 20, **caractérisé en ce que** le dispositif de mesure comprend un dispositif de pesage pour détecter les poids individuels et/ou un dispositif de mesure de la température de la volaille (47) pour détecter la température de la volaille, qui sont adaptés pour détecter les poids individuels et/ou la température de la volaille en tant que grandeur de mesure pertinente pour le temps de séjour de refroidissement.

22. Agencement selon l'une quelconque des revendications 1 à 21, **caractérisé en ce que** la vitesse de transport est au moins essentiellement constante.

23. Procédé de traitement de volailles, comprenant
le transport de la volaille à une vitesse de transport prédéfinie au moyen d'un dispositif de transport suspendu (10) formant un parcours de transport, qui est adapté pour transporter la volaille suspendue par les pattes, une pluralité de stations de traitement étant agencées le long du parcours de transport, et le parcours de transport présentant des sections de transport de traitement pour le traitement de la volaille à chacune des stations de traitement,
**caractérisé par**
le réglage commandé d'au moins deux longueurs de section de traitement des sections de transport de traitement.

24. Procédé selon la revendication 23, **caractérisé en ce que** les longueurs de section de traitement des sections de transport de traitement sont respectivement réglées en cours de fonctionnement au moyen d'un dispositif de commande.

25. Procédé selon la revendication 24, **caractérisé en ce que**, lors de la modification d'une des longueurs de section de traitement, les autres longueurs de section de traitement sont ajustées et réglées au moyen du dispositif de commande sur la base de longueurs de section de consigne prédéfinies.

26. Procédé selon l'une quelconque des revendications 23 à 25, **caractérisé en ce que** les stations de traitement comprennent au moins une station d'étourdissement (11) pour étourdir la volaille, une station d'abattage (12) pour ouvrir les veines du cou et saigner la volaille, et une station d'échaudage (13) pour échauder la volaille.

27. Procédé selon l'une quelconque des revendications 23 à 26, **caractérisé en ce que** le dispositif de transport suspendu (10) est un transporteur rotatif sans fin.

28. Procédé selon la revendication 27, **caractérisé en ce que** les sections de traitement de longueur variable de la station d'étourdissement (11), de la station d'abattage (12) et/ou de la station d'échaudage (13) sont formées respectivement par au moins deux éléments de renvoi (19) autour desquels une chaîne de transport (20) du transporteur suspendu (10) tourne au moins partiellement, et au moins l'un des éléments de renvoi (19) est déplacé pour modifier de manière commandable la longueur de section de traitement.

29. Procédé selon la revendication 28, **caractérisé par** la compensation, au moyen d'un dispositif de compensation (22), d'une modification de la longueur totale du parcours de transport résultant d'une modification des longueurs de section de traitement.

30. Procédé selon la revendication 29, **caractérisé en ce que** le dispositif de compensation (22) comprend un élément de renvoi (19) configuré sous forme d'élément de renvoi du parcours de compensation et forme ainsi un parcours de compensation de longueur variable pour recevoir la chaîne de transport (20), la position de l'élément de renvoi du parcours de compensation étant modifiée pour modifier de manière commandable la longueur de parcours de compensation.

31. Procédé selon la revendication 30, **caractérisé par** la commande du dispositif de compensation (22) au moyen du dispositif de commande de telle sorte que la longueur du parcours de compensation corresponde à la somme des modifications des longueurs de sections de traitement.

32. Procédé selon l'une quelconque des revendications 26 à 31, **caractérisé en ce que** la station d'étourdissement (11), la station d'abattage (12) et la station d'échaudage (13) présentent chacune des dimensions longitudinales supérieures aux sections de transport de traitement respectives.

33. Procédé selon l'une quelconque des revendications 23 à 32, **caractérisé en ce que** les stations de traitement comprennent une station de plumage (14) pour plumer la volaille, une pluralité de groupes d'outils de plumage (23, 24, 25) étant agencés le long de la section de transport de traitement de la station de plumage (14), les outils de plumage étant respectivement commandés de telle sorte que ceux-ci viennent en contact de traitement avec la volaille dans des sections de contact prédéfinies de la section de transport de traitement.

34. Procédé selon la revendication 33, **caractérisé en ce que**, pour modifier la longueur de section de traitement de la station de plumage (14), les groupes d'outils de plumage (23, 24, 25) sont activés ou désactivés individuellement de manière présélectionnée au moyen du dispositif de commande.

35. Procédé selon la revendication 33, **caractérisé en ce que**, pour modifier la longueur de section de traitement de la station de plumage (14), l'écartement des outils d'au moins un des groupes d'outils de plumage (23, 24, 25) est modifié au moyen du dispositif de commande.

36. Procédé selon l'une quelconque des revendications 23 à 35, **caractérisé en ce que** les stations de traitement comprennent au moins une station d'éviscération (15) pour enlever les viscères de la volaille, les outils de traitement étant chacun agencés sur un support d'outil circulaire (26) et la section de transport de traitement du parcours de transport de l'au moins une station d'éviscération (15) étant en conséquence en forme d'arc de cercle, la longueur de section de traitement étant réglée en modifiant de manière commandée la position d'entrée et/ou de sortie (27, 28) de la section de transport de traitement sur le support d'outil circulaire (26) au moyen du dispositif de commande.

37. Procédé selon la revendication 36, **caractérisé en ce que** la position d'entrée et/ou de sortie sont commandée par le déplacement d'éléments de guidage (29) au moyen du dispositif de commande.

38. Procédé selon la revendication 37, **caractérisé en ce que** les éléments de guidage (29) comprennent chacun au moins une roue de guidage d'entrée (30) ainsi qu'au moins une roue de guidage de sortie (31) qui sont agencées de manière mobile par commande.

39. Procédé selon la revendication 38, **caractérisé en ce que** la section de transport de traitement entoure les outils de traitement sur le support d'outil circulaire (26) en forme d'arc de cercle dans une zone angulaire d'appui d'au moins 180°.

40. Procédé selon la revendication 39, **caractérisé en ce que** l'au moins une roue de guidage d'entrée (30) ainsi que l'au moins une roue de guidage de sortie (31) sont agencées respectivement sur les côtés de la section de transport de traitement opposés aux outils de traitement.

41. Procédé selon la revendication 40, **caractérisé en ce que** la zone angulaire d'appui est augmentée jusqu'à un maximum de 270° par déplacement mobile par commande de la roue de guidage d'entrée (30) et de la roue de guidage de sortie (31).

42. Procédé selon l'une quelconque des revendications 23 à 41, comprenant en outre les étapes suivantes :
le refroidissement de la volaille au moyen d'un dispositif de refroidissement (16),
le transfert de la volaille vers une première ligne de refroidissement sans fin (35) au moyen d'une station d'entrée (34),
la détection d'au moins une grandeur de mesure pertinente pour le temps de séjour de refroidissement de la volaille au moyen d'un dispositif de mesure,
le dispositif de refroidissement (33) comprenant au moins une deuxième ligne de refroidissement sans fin (36) qui est reliée au moyen d'une station de transfert (37, 39) à la première ligne de refroidissement sans fin (35) pour le transfert commandable de la volaille de la première ligne de refroidissement sans fin (35) à la deuxième ligne de refroidissement sans fin (36), et
d'autres stations de transfert (40) étant agencées sur la première ligne de refroidissement sans fin (35) et sur l'au moins une deuxième ligne de refroidissement sans fin (36) pour le transfert commandable de la volaille à une autre station de traitement agencée en aval (41), et
la détermination du parcours de transport de refroidissement nécessaire pour chaque carcasse de volaille sur la base de la grandeur de mesure pertinente pour le temps de séjour de refroidissement et la commande correspondante de la station de transfert (37, 39) ainsi que des autres stations de transfert (40), de sorte que la carcasse de volaille respective passe par le parcours de transport de refroidissement nécessaire.

43. Procédé selon la revendication 42, **caractérisé en ce que** les poids individuels sont détectés au moyen d'un dispositif de pesage et/ou la température de la volaille est détectée au moyen d'un dispositif de mesure de la température de la volaille (47) en tant que grandeur de mesure pertinente pour le temps de séjour de refroidissement.

44. Procédé selon l'une quelconque des revendications 23 à 43, **caractérisé en ce que** la vitesse de transport est au moins essentiellement constante.
